# EUROPEAN PATENT APPLICATION

(11) **EP 4 083 135 A1**
(43) Date of publication of application: **02.11.2022**
(21) Application number: 20907889.8
(22) Date of filing: 10.12.2020
(51) Int. Cl.: C08L 53/02, C08L 67/00

(54) **THERMOPLASTIC ELASTOMER COMPOSITION, VIBRATION-DAMPING MATERIAL, GEAR, AND MOLDED COMPOSITE OBJECT**

(30) Priority: 27.12.2019 JP 2019238582
(71) Applicant: Kuraray Co., Ltd., Kurashiki-shi, Okayama 710-0801 (JP)
(72) Inventor: SENDA, Yasushi, Kamisu-shi, Ibaraki 314-0197 (JP); KATO, Masahiro, Kamisu-shi, Ibaraki 314-0197 (JP)
(74) Representative: Müller-Boré & Partner Patentanwälte PartG mbB
(86) International application number: PCT/JP2020/045977
(87) International publication number: WO 2021/131733

(57) **Abstract**

Provided is a thermoplastic elastomer composition and the like which can have improved vibration-damping properties while retaining properties inherent in a polyester-based thermoplastic elastomer. The thermoplastic elastomer composition contains a polyester-based thermoplastic elastomer (A) and a hydrogenated aromatic vinyl compound-based elastomer (B) having a glass transition temperature Tg of -10 to 40°C, wherein the hydrogenated aromatic vinyl compound-based elastomer (B) is a hydrogenate of a block copolymer containing a polymer block (a) having a structural unit derived from an aromatic vinyl compound and a polymer block (b) having a structural unit derived from a conjugated diene compound, and the ratio by mass of the polyester-based thermoplastic elastomer (A) to the hydrogenated aromatic vinyl compound-based elastomer (B), (A/B) is 99/1 to 1/99.

## Description

### Technical Field

The present invention relates to a thermoplastic elastomer composition, a vibration-damping material, a gear, and a molded composite object (composite molded object).

### Background Art

In the case of producing a composite molded object of a combination of resins not thermally fusion-bonding to each other, a rugged portion is provided in a composite area of the two, or a core material is partly coated with a surface layer material, or a core material is perforated so as to make a surface layer material run around to the backside, or an adhesive material is applied to the bonding portion. Consequently, various problems have occurred in the resultant composite molded object, for example, a problem that the bonding power between the neighboring two layers is poor, a problem that the structure is complicated, and a problem that the number of processes in the production stage increases.

Under such circumstances, for solving the above-mentioned problems, a styrene-based elastomer is added to a polyester-based thermoplastic elastomer (TPEE) to give a thermoplastic elastomer composition excellent in thermal adhesiveness to a thermal-fusing material (for example, see PTL 1).

### Citation List

### Patent Literature

PTL 1: JP3381488B

### Summary of Invention

### Technical Problem

However, there has occurred a new problem that the above-mentioned thermoplastic elastomer composition is not sufficient in vibration-damping performance.

With that, an object of the present invention is to provide a thermoplastic elastomer composition that can have improved vibration-damping properties while retaining properties inherent in a polyester-based thermoplastic elastomer, a vibration-damping material containing the thermoplastic elastomer composition, a gear containing the thermoplastic elastomer composition, and a composite molded object having a thermoplastic elastomer composition layer that contains the thermoplastic elastomer composition.

### Solution to Problem

The present inventors have repeatedly made assiduous studies for solving the above-mentioned problems and, as a result, have found that, by adding a hydrogenated aromatic vinyl compound-based elastomer (B) whose glass transition temperature falls within a predetermined range to a polyester-based thermoplastic elastomer (A), the resultant mixture can have improved vibration-damping properties while retaining the properties inherent in the polyester-based thermoplastic elastomer (A), and therefore the above-mentioned problems can be solved, and have completed the present invention.

Specifically, the present invention is as mentioned below.

A thermoplastic elastomer composition containing a polyester-based thermoplastic elastomer (A) and a hydrogenated aromatic vinyl compound-based elastomer (B) having a glass transition temperature Tg of -10 to 40°C, wherein:
the hydrogenated aromatic vinyl compound-based elastomer (B) is a hydrogenate of a block copolymer containing a polymer block (a) having a structural unit derived from an aromatic vinyl compound and a polymer block (b) having a structural unit derived from a conjugated diene compound, and
the ratio by mass of the polyester-based thermoplastic elastomer (A) to the hydrogenated aromatic vinyl compound-based elastomer (B), (A/B) is 99/1 to 1/99.

### Advantageous Effects of Invention

According to the present invention, there can be provided a thermoplastic elastomer composition that can have improved vibration-damping properties while retaining properties inherent in a polyester-based thermoplastic elastomer, a vibration-damping material containing the thermoplastic elastomer composition, a gear containing the thermoplastic elastomer composition, and a composite molded object having a thermoplastic elastomer composition layer that contains the thermoplastic elastomer composition.

### Embodiments of Invention

In the present specification, a preferred prescription can be arbitrarily selected, and a combination of preferred prescriptions can be said to be more preferred.

In the present specification, a description of "XX to YY" means "XX or more and YY or less".

In the present specification, regarding a preferred numerical range (for example, a range of a content), a lower limit and an upper limit that are stepwise described can be independently combined. For example, from a description "preferably 10 to 90, more preferably 30 to 60", "the preferred lower limit (10)" and "the more preferred upper limit (60)" can be combined to be "10 to 60".

In the present specification, "~ unit" (here "~" indicates a monomer) means "a structural unit derived from ~", and for example, "a propylene unit" means "a structural unit derived from propylene".

In the present specification, for example, "(meth)acrylic acid" indicates both "acrylic acid" and "methacrylic acid", and the same shall apply to the other similarity terms.

In the present specification, a weight-average molecular weight is a standard polystyrene-equivalent weight-average molecular weight measured in gel permeation chromatography (GPC).

### (Thermoplastic Elastomer Composition)

The thermoplastic elastomer composition of the present invention contains a polyester-based thermoplastic elastomer (A) and a hydrogenated aromatic vinyl compound-based elastomer (B), and optionally further contains additives.

The ratio by mass of the polyester-based thermoplastic elastomer (A) to the hydrogenated aromatic vinyl compound-based elastomer (B), (A/B) is not specifically limited so far as it is 99/1 to 1/99, but is, from the viewpoint of the balance of oil resistance, solvent resistance and vibration-damping properties, preferably 75/25 to 95/5, more preferably 80/20 to 90/10.

Here, when the amount of the hydrogenated aromatic vinyl compound-based elastomer (B) added is too small (the ratio by mass (A/B) is more than 99/1), there may be a possibility that vibration-damping properties cannot be exhibited.

On the other hand, when the amount of the hydrogenated aromatic vinyl compound-based elastomer (B) added is too large (the ratio by mass (A/B) is less than 1/99), there may be a possibility that the properties inherent in thermoplastic polyester-based elastomer (TPEE) may be lost.

### <Polyester-Based Thermoplastic Elastomer (A)>

The polyester-based thermoplastic elastomer (A) can be obtained, for example, by polycondensation of an oligomer prepared by esterification or interesterification of (i) an aliphatic and/or alicyclic diol having 2 to 12 carbon atoms, (ii) an aromatic dicarboxylic acid or an alkyl ester thereof, and (iii) a polyalkylene ether glycol used as raw materials.

### <<(i) Aliphatic and/or Alicyclic Diol having 2 to 12 carbon atoms>>

The aliphatic and/or alicyclic diol having 2 to 12 carbon atoms may be any one known as a raw material for a polyester, especially one known as a raw material for a polyester elastomer, and examples thereof include ethylene glycol, propylene glycol, trimethylene glycol, 1,4-butanediol, 1,4-cyclohexanediol, and 1,4-cyclohexanedimethanol. One alone or two or more kinds of these aliphatic and/or alicyclic diols can be used either singly or as combined. Among these, 1,4-butanediol and ethylene glycol are preferred, and 1,4-butanediol is more preferred.

### <<(ii) Aromatic Dicarboxylic Acid or alkyl ester thereof>>

The aromatic dicarboxylic acid may be any one known as a raw material for a polyester, especially as a raw material for a polyester elastomer, and examples thereof include terephthalic acid, isophthalic acid, phthalic acid, and 2,6-naphthalenedicarboxylic acid. One alone or two or more kinds of these aromatic dicarboxylic acids may be used either singly or as combined. Among these, terephthalic acid and 2,6-naphthalenedicarboxylic acid are preferred, and terephthalic acid is more preferred.

The alkyl ester of an aromatic dicarboxylic acid includes dimethyl esters such as dimethyl terephthalate, dimethyl isophthalate, dimethyl phthalate, and 2,6-dimethyl naphthalate. One alone or two or more kinds of these alkyl esters of an aromatic dicarboxylic acid can be used either singly or as combined. Among these, dimethyl terephthalate and 2,6-dimethyl naphthalate are preferred, and dimethyl terephthalate is more preferred.

In addition to the above, a small amount of a trifunctional diol and any other diol as well as other dicarboxylic acid and an ester thereof may be copolymerized, and further, an aliphatic or alicyclic dicarboxylic acid such as adipic acid, or an alkyl ester thereof and the like may be used as a copolymerization component.

### <<(iii) Polyalkylene Ether Glycol>>

Examples of the polyalkylene ether glycol include a polyethylene glycol, a poly(1,2 and 1,3-propylene ether) glycol, a polytetramethylene ether glycol, a polyhexamethylene ether glycol, a block or random copolymer of ethylene oxide and propylene oxide, and a block or random copolymer of ethylene oxide and tetrahydrofuran. One alone or two or more kinds of these polyalkylene ether glycols may be used either singly or as combined. Among these, polytetramethylene ether glycol is preferred.

The weight-average molecular weight of the polyalkylene ether glycol is preferably 400 to 6,000, more preferably 500 to 4,000, even more preferably 600 to 3,000. When the weight-average molecular weight of the polyalkylene ether glycol falls within the above range, the behavior as the block of the copolymer can improve and the physical properties of the polymer can be prevented from being degraded by phase separation in the system.

The content of the polyalkylene ether glycol is preferably 5 to 95% by mass relative to the block copolymer to be formed, more preferably 10 to 85% by mass, even more preferably 20 to 80% by mass. When the content of the polyalkylene ether glycol is less than 95% by mass, polymer production by polycondensation is possible.

In place of the above-mentioned polyalkylene ether glycol, (iv) a polyester oligomer prepared by condensation of an aliphatic or alicyclic dicarboxylic acid and an aliphatic diol or (v) a polyester oligomer synthesized from an aliphatic lactone or an aliphatic mono-ol carboxylic acid may also be used.

### <<(iv) Polyester Oligomer prepared by condensation of aliphatic or alicyclic dicarboxylic acid and aliphatic diol>>

Examples of the polyester oligomer prepared by condensation of an aliphatic or alicyclic dicarboxylic acid and an aliphatic diol include a polyester oligomer having a structure formed by condensation of (a) one or more of alicyclic dicarboxylic acids such as 1,4-cyclohexanedicarboxylic acid, 1,2-cyclohexanedicarboxylic acid, and dicyclohexyl-4,4'-dicarboxylic acid, or aliphatic or alicyclic dicarboxylic acids such as succinic acid, oxalic acid, adipic acid and sebacic acid, and (b) one or more of aliphatic diols such as ethylene glycol, propylene glycol, tetramethylene glycol and pentamethylene glycol.

### <<(v) Polyester Oligomer synthesized from aliphatic lactone or aliphatic mono-ol carboxylic acid>>

Examples of the polyester oligomer synthesized from an aliphatic lactone or an aliphatic mono-ol carboxylic acid include a polycaprolactone-based polyester oligomer synthesized from ε-caprolactone or ω-oxycaproic acid.

### «Esterification, Interesterification, Polycondensation»

The above-mentioned esterification, interesterification and polycondensation can be performed according to ordinary methods.

As a catalyst in these reactions, one or more known catalysts such as tin, titanium, zinc or manganese alcoholates, chlorides and oxides can be used. An organotitanium-based catalyst is preferably used, and tetrabutyl titanate is more preferably used.

As a promoter, phosphoric acid, phosphorous acid, hypophosphorous acid or a metal salt thereof may be added. Among these, from the viewpoint of bettering hydrolysis resistance, an alkali metal hypophosphite is preferably added.

### [Alkali Metal Hypophosphite]

Examples of the alkali metal hypophosphite include sodium hypophosphite, potassium hypophosphite, and lithium hypophosphite. Among these, sodium hypophosphite is preferred.

Not specifically limited, the amount of the alkali metal hypophosphite to be added is preferably 1 to 1,000 ppm by mass relative to the polymer to be formed, more preferably 3 to 200 ppm by mass, even more preferably 5 to 80 ppm by mass.

By controlling the amount to be added of the alkali metal hypophosphite to fall within the above range, the addition effect can be attained sufficiently and the polycondensation can be prevented from being suppressed.

The method for adding the alkali metal hypophosphite is not specifically limited. An alkali metal hypophosphite in any state of solution, slurry or solid can be added to a molten polymer, but is preferably added in a state of slurry.

The time at which the alkali metal hypophosphite is added is not specifically limited, and it may be added in any stage before termination of polycondensation, that is, in any stage during before esterification or before interesterification to before finish of polycondensation, but from the viewpoint that reduction in polymerization performance is small, the alkali metal hypophosphite is preferably added just before the start of polycondensation.

Any other additive than the above-mentioned catalyst and promoter can exist in the reaction step of esterification, interesterification and polycondensation.

Examples of the other additive than the catalyst and the promoter include a hindered phenol-based oxidation stabilizer, a hindered amine-based oxidation stabilizer, a phosphorus-based oxidation stabilizer, a sulfur-based oxidation stabilizer, and a triazole-based light-resistant stabilizer, and in addition to these, some other known additives.

Among these, a hindered phenol-based oxidation stabilizer is preferred. More preferably from the viewpoint of the effect thereof, a hindered phenol-based oxidation stabilizer is added in an amount of 0.01 to 1% by mass relative to polymer.

Esterification or interesterification is carried out generally at 120 to 250°C, preferably at 150 to 230°C. Melt polycondensation, a type of polycondensation is carried out generally under a reduced pressure of 10 Torr or less, at 200 to 280°C for 2 to 6 hours.

In general, the polymer produced by melt polycondensation is kept at a temperature not lower than the melting point thereof, and is subsequently discharged from a reaction tank and pelletized. The resultant pellets may be further subjected to solid-phase polymerization, as needed. The polyester-based thermoplastic elastomer (A) of the type includes commercially-available polymers, "Pelprene P" or "Pelprene S" (trade name by Toyobo Co., Ltd.) and "Hytrel" (trade name by DuPont-Toray Co., LTD.), "Lomod" (trade name by Nippon GE Plastics Co., Ltd.) "Nichigo Polyester" (trade name by The Nippon Synthetic Chemical Industry Co., Ltd.), and "Teijin Polyester Elastomer" (trade name by Teijin Ltd.).

### <<Content of Polyester-based Thermoplastic Elastomer (A)>>

The content of the polyester-based thermoplastic elastomer (A) in the thermoplastic elastomer composition is not specifically limited so far as it is 1% by mass or more and 99% by mass or less relative to 100% by mass of the total amount of the thermoplastic elastomer composition, and can be appropriately controlled depending on the kind of the polyester-based thermoplastic elastomer (A) and the use of the thermoplastic elastomer composition. Not specifically limited, the content of the polyester-based thermoplastic elastomer (A) may be, for example, relative to 100% by mass of the total amount of the thermoplastic elastomer composition, 90% by mass or less, 75% by mass or less, 60% by mass or less, or 50% by mass or less, and may be 10% by mass or more, 25% by mass or more, 40% by mass or more, or 50% by mass or more.

### <<Structure of Polyester-based Thermoplastic Elastomer (A)>>

The structure of the polyester-based thermoplastic elastomer (A) is not specifically limited, and examples thereof include a structure formed of a hard segment (crystal phase) of a polyester moiety and a soft segment (amorphous phase) of a polyether moiety or a polyester moiety.

The polyester moiety of a hard segment includes a polybutylene terephthalate (PBT) moiety, a polyethylene terephthalate moiety, and a polyethylene naphthalate moiety.

Examples of the polyether moiety of a soft segment include an aliphatic polyether moiety such as a polytetramethylene ether moiety.

Examples of the polyester moiety of a soft segment include an aliphatic polyester moiety such as a poly ε-caprolactone moiety.

### <<Maximum value of tanδ intensity at 0 to 40°C of polyester-based thermoplastic elastomer (A)>>

The maximum value of a tanδ intensity at 0 to 40°C of the polyester-based thermoplastic elastomer (A) is not specifically limited but is preferably 0.05 or more, more preferably 0.055 or more, even more preferably 0.06 or more.

When the maximum value of a tanδ intensity of the polyester-based thermoplastic elastomer (A) falls within the above range, vibration-damping performance can better more.

The maximum value of a tanδ intensity of the polyester-based thermoplastic elastomer (A) is a value measured according to the measurement method described in the section of Examples.

In the case where the thermoplastic elastomer composition contains plural kinds of polyester-based thermoplastic elastomer (A), the maximum value of a tanδ intensity of the thermoplastic elastomer composition only consisting of the plural kinds of polyester-based thermoplastic elastomer (A) is the maximum value of a tanδ intensity at 0 to 40°C of the polyester-based thermoplastic elastomer (A).

### «Properties inherent in polyester-based thermoplastic elastomer (A)»

Properties inherent in the polyester-based thermoplastic elastomer (A) include oil resistance, heat resistance, sliding performance, good moldability, mechanical strength, chemical resistance and antiaging performance based on the hard segment (crystal phase), and sound-damping performance, low-temperature flexibility and high impact absorbing performance based on the soft segment (amorphous phase).

### <Hydrogenated Aromatic Vinyl Compound-based Elastomer (B)>

The hydrogenated aromatic vinyl compound-based elastomer (B) is a hydrogenate prepared by hydrogenation of a block copolymer that contains a polymer block (a) having a structural unit derived from an aromatic vinyl compound and a polymer block (b) having a structural unit derived from a conjugated diene compound.

### <<Polymer Block (a)>>

The polymer block (a) constituting the block copolymer is a polymer block having a structural unit derived from an aromatic vinyl compound used as a monomer.

Since the polymer block (a) is a polymer block having a structural unit derived from an aromatic vinyl compound, the composition can have improved vibration-damping properties and mechanical properties.

The polymer block (a) preferably contains a structural unit derived from an aromatic vinyl compound (hereinafter this may be abbreviated as "aromatic vinyl compound unit") in an amount of more than 70 mol% in the polymer block (a), and from the viewpoint of mechanical properties, preferably in an amount of 80 mol% or more, more preferably 90 mol% or more, even more preferably 95 mol% or more, and especially preferably the content is substantially 100 mol%.

### [Aromatic Vinyl Compound]

Examples of the aromatic vinyl compound include styrene, o-methylstyrene, m-methylstyrene, p-methylstyrene, α-methylstyrene, β-methylstyrene, 2,6-dimethylstyrene, 2,4-dimethylstyrene, α-methyl-o-methylstyrene, α-methyl-m-methylstyrene, α-methyl-p-methylstyrene, β-methyl-o-methylstyrene, β-methyl-m-methylstyrene, β-methyl-p-methylstyrene, 2,4,6-trimethylstyrene, α-methyl-2,6-dimethylstyrene, α-methyl-2,4-dimethylstyrene, β-methyl-2,6-dimethylstyrene, β-methyl-2,4-dimethylstyrene, o-chlorostyrene, m-chlorostyrene, p-chlorostyrene, 2,6-dichlorostyrene, 2,4-dichlorostyrene, α-chloro-o-chlorostyrene, α-chloro-m-chlorostyrene, α-chloro-p-chlorostyrene, β-chloro-o-chlorostyrene, β-chloro-m-chlorostyrene, β-chloro-p-chlorostyrene, 2,4,6-trichlorostyrene, α-chloro-2,6-dichlorostyrene, α-chloro-2,4-dichlorostyrene, β-chloro-2,6-dichlorostyrene, β-chloro-2,4-dichlorostyrene, o-t-butylstyrene, m-t-butylstyrene, p-t-butylstyrene, o-methoxystyrene, m-methoxystyrene, p-methoxystyrene, o-chloromethylstyrene, m-chloromethylstyrene, p-chloromethylstyrene, o-bromomethylstyrene, m-bromomethylstyrene, p-bromomethylstyrene, silyl group-substituted styrene derivatives, indene, vinylnaphthalene, and N-vinylcarbazole. One alone or two or more kinds of these aromatic vinyl compounds may be used either singly or as combined. Among these, from the viewpoint of the balance of production cost and physical properties, styrene, α-methylstyrene, p-methylstyrene, and mixtures thereof are preferred, and styrene is more preferred.

Not interfering with the object and the advantageous effects of the present invention, the polymer block (a) may contain a structural unit derived from any other unsaturated monomer than aromatic vinyl compounds (hereinafter this may be abbreviated as "other unsaturated monomer unit") in an amount of preferably 30 mol% or less in the polymer block (a), more preferably less than 20 mol%, even more preferably less than 15 mol%, further more preferably less than 10 mol%, further more preferably less than 5 mol%, and especially preferably 0 mol%.

Examples of the other unsaturated monomer include at least one selected from the group consisting of butadiene, isoprene, 2,3-dimethylbutadiene, 1,3-pentadiene, 1,3-hexadiene, isobutylene, methyl methacrylate, methyl vinyl ether, β-pinene, 8,9-p-menthene, dipentene, methylenenorbornene, and 2-methylene-tetrahydrofuran. The bonding mode in the case where the polymer block (a) contains the other unsaturated monomer unit is not specifically limited, and may be any of a random or tapered mode.

The block copolymer has at least one polymer block (a). In the case where the block copolymer has two or more polymer blocks (a), these polymer blocks (a) may be the same or different. In the present specification, the wording "polymer blocks differ" means that the polymer blocks differ in at least one of the monomer unit constituting the polymer block, the weight-average molecular weight, the stereoregularity, and the ratio and the copolymerization mode (random, gradient, block) of the monomer units in the case of having plural monomer units.

### [Weight-Average Molecular Weight]

The weight-average molecular weight (Mw) of the polymer block (a) is not specifically limited, but preferably, the weight-average molecular weight of at least one polymer block (a) among the polymer blocks (a) that the block copolymer has is 3,000 to 60,000, more preferably 4,000 to 50,000. When the block copolymer has at least one polymer block (a) whose weight-average molecular weight falls within the above range, mechanical strength improves more and moldability can also be excellent.

The weight-average molecular weight is a standard polystyrene-equivalent weight-average molecular weight measured in gel permeation chromatography (GPC).

### [Content of Polymer Block (a)]

The content of the polymer block (a) in the block copolymer is preferably 30% by mass or less, more preferably 16% by mass or less, even more preferably 14% by mass or less. When the content of the polymer block (a) in the block copolymer is 30% by mass or less, the block copolymer can give a hydrogenate having appropriate flexibility and excellent in vibration-damping performance without lowering the peak top intensity of tanδ. The lower value is preferably 1% by mass or more, more preferably 3% by mass or more, even more preferably 6% by mass or more. When the content is 1% by mass or more, the block copolymer can give a hydrogenate having mechanical properties and moldability appropriate for various applications.

The content of the polymer block (a) in the block copolymer is a value determined by ¹H-NMR measurement, and more precisely, a value measured according to the method described in the section of Examples.

### <<Polymer Block (b)>>

The polymer block (b) constituting the block copolymer is a polymer block having a structural unit derived from a conjugated diene compound, and preferably has a structural unit containing at least one alicyclic skeleton (X) represented by the following formula (X) in the main chain (hereinafter this may be abbreviated as "alicyclic skeleton-containing unit").

The polymer block (b) may also contain a structural unit derived from a conjugated diene compound not having the alicyclic skeleton (X) (hereinafter this may be abbreviated as "conjugated diene unit").

The total of the conjugated diene unit in the polymer block (b) is, though not specifically limited thereto, preferably 50 mol% or more, more preferably 70 mol% or more, even more preferably 90 mol% or more, and is especially preferably substantially 100 mol%.

The total of the alicyclic skeleton-containing unit and the conjugated diene unit in the polymer block (b) is, though not specifically limited thereto but from the viewpoint of developing excellent vibration-damping performance, preferably 50 mol% or more, more preferably 70 mol% or more, even more preferably 90 mol% or more, and is especially preferably substantially 100 mol%.

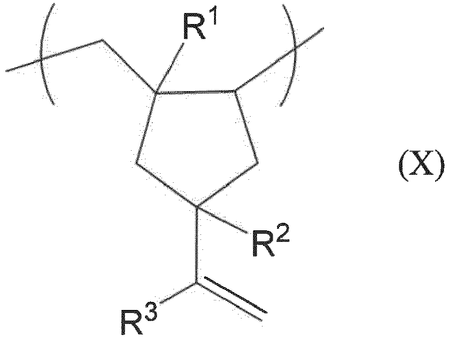

In the formula (X), R¹ to R³ each independently represent a hydrogen atom or a hydrocarbon group having 1 to 11 carbon atoms, and plural R¹'s to R³'s each may be the same or different.

In the formula (X), R¹ to R³ each independently represent a hydrogen atom or a hydrocarbon group having 1 to 11 carbon atoms, and plural R¹'s to R³'s each may be the same or different. The carbon number of the hydrocarbon group is preferably 1 to 5, more preferably 1 to 3, even more preferably 1 (that is, a methyl group). The hydrocarbon group may be a linear or branched one, and may be a saturated or unsaturated hydrocarbon group. From the viewpoint of physical properties and formation of the alicyclic skeleton (X), R¹ to R³ are preferably each independently a hydrogen atom or a methyl group.

In hydrogenation of the block copolymer, the vinyl group in the formula (X) may be hydrogenated. Consequently, the alicyclic skeleton (X) in the resultant hydrogenate includes a skeleton where the vinyl group in the formula (X) is hydrogenated.

The polymer block (b) is a structural unit derived from a conjugated diene compound, and the alicyclic skeleton (X) is derived from the conjugated diene compound. The alicyclic skeleton (X) is formed by anionic polymerization of a conjugated diene compound according to the method to be described hereinunder, and preferably, depending on the conjugated diene compound used, the alicyclic skeleton (X) is contained in the main chain of an alicyclic skeleton-containing unit. When the alicyclic skeleton (X) is incorporated in the main chain of the structural unit contained in the polymer block (b), the glass transition temperature increases since the molecular movement decreases, and the peak top intensity of tanδ at around room temperature improves to develop excellent vibration-damping performance.

### [Conjugated Diene Compound]

Examples of the conjugated diene compound include butadiene, isoprene, hexadiene, 2,3-dimethyl-1,3-butadiene, 2-phenyl-1,3-butadiene, 1,3-pentadiene, 2-methyl-1,3-pentadiene, 1,3-hexadiene, 1,3-octadiene, 1,3-cyclohexadiene, 2-methyl-1,3-octadiene, 1,3,7-octatriene, farnesene, myrcene and chloroprene. One alone or two or more kinds of these conjugated diene compounds can be used either singly or as combined. Among these, isoprene is preferably contained.

In the case of using isoprene and butadiene together, the blending ratio of the two [isoprene/butadiene] (ratio by mass) is not specifically limited but is preferably 5/95 to 95/5, more preferably 10/90 to 90/10, even more preferably 40/60 to 70/30, further more preferably 45/55 to 65/35. The blending ratio [isoprene/butadiene] is, as a ratio by mol, preferably 5/95 to 95/5, more preferably 10/90 to 90/10, even more preferably 40/60 to 70/30, further more preferably 45/55 to 55/45.

In a specific example where butadiene or isoprene is used or both butadiene and isoprene are used together as the conjugated diene compound, the alicyclic skeleton (X) to be formed mainly is described below.

In the case where butadiene is used alone as the conjugated diene compound, an alicyclic skeleton (X) having a combination of substituents of the following (i) can be formed. Namely, in this case, the alicyclic skeleton (X) is an alicyclic skeleton alone where R¹ to R³ are all hydrogen atoms. Accordingly, in one example of a preferred embodiment of the block copolymer or a hydrogenate thereof, the polymer block (b) has a structural unit that contains one kind of alicyclic skeleton (X) where R¹ to R³ are all hydrogen atoms in the main chain.

In the case where isoprene alone is used as the conjugated diene compound, two kinds of alicyclic skeleton (X) having a combination of substituents of the following (v) and (vi) are formed mainly.
In the case where butadiene and isoprene are used together as the conjugated diene compound, six kinds of alicyclic skeleton (X) having a combination of substituents of the following (i) to (vi) are formed mainly.
(i) : R¹= hydrogen atom, R²= hydrogen atom, R³= hydrogen atom
(ii): R¹= hydrogen atom, R²= methyl group, R³= hydrogen atom
(iii): R¹= hydrogen atom, R²= hydrogen atom, R³= methyl group
(iv): R¹= methyl group, R²= hydrogen atom, R³= hydrogen atom
(v): R¹= methyl group, R²= methyl group, R³= hydrogen atom
(vi): R¹= methyl group, R²= hydrogen atom, R³= methyl group

From the viewpoint that the above formula (X) having a hydrocarbon group as a substituent suppresses molecular movement and therefore further improves vibration-damping performance, preferably, at least one alicyclic skeleton (X) in the polymer block (b) is an alicyclic skeleton (X') where at least one of R¹, R² or R³ is a hydrocarbon group having 1 to 11 carbon atoms. Among these, from the viewpoint of efficiently forming the alicyclic skeleton from the conjugated diene compound to attain a good balance of vibration-damping performance and mechanical characteristics, more preferably, the hydrocarbon group in the alicyclic skeleton (X') is a methyl group.

In particular, an alicyclic skeleton is more preferred where R¹ to R³ each are independently a hydrogen atom or a methyl group, and all R¹ to R³ are not hydrogen atoms at the same time. Namely, the polymer block (b) preferably has a structural unit that contains, in the main chain, at least any one of the alicyclic skeletons having a combination of substituents of the above (ii) to (vi).

### [Vinyl Bond Content in Polymer Block (b)]

In the case where the structural unit constituting the polymer block (b) is any of an isoprene unit, a butadiene unit, or a mixed unit of isoprene and butadiene, the bonding mode of isoprene and butadiene except the bonding mode to form the alicyclic skeleton (X) includes a 1,2-bond and a 1,4-bond for butadiene, and a 1,2-bond, a 3,4-bond and a 1,4-bond for isoprene.

The total content of the 3,4-bond unit and the 1,2-bond unit in the polymer block (b) (hereinafter this may be simply referred to as "vinyl bond content") is, though not specifically limited thereto, preferably 65 to 90 mol%, more preferably 70 to 87 mol%, even more preferably 75 to 85 mol%. Within the above range, excellent vibration-damping performance can be developed. Here, the vinyl bond content is a value calculated in ¹H-NMR measurement according to the method described in the section of Examples. In the case where the polymer block (b) is formed of butadiene alone, "the content of the 3,4-bond unit and the 1,2-bond unit" described above is replaced with "the content of the 1,2-bond unit".

### [Content of Alicyclic Skeleton (X) in polymer block (b)]

From the viewpoint of developing a more excellent vibration-damping effect and preventing reduction in cohesive and adhesive force even at high temperatures, preferably, the polymer block (b) contains the alicyclic skeleton (X) in an amount of 1 mol% or more, more preferably 1.1 mol% or more, even more preferably 1.4 mol% or more, further more preferably 1.8 mol% or more, further more preferably 4 mol% or more, further more preferably 10 mol% of more, and further more preferably 13 mol% or more. The upper limit of the content of the alicyclic skeleton (X) in the polymer block (b) is not specifically limited so far as it falls within a range not detracting from the advantageous effects of the present invention, but is, from the viewpoint of productivity, preferably 40 mol% or less, or may be 30 mol% or less, or may be 20 mol% or less, or may be 18 mol% or less.

From the viewpoint of further improving vibration-damping performance, the polymer block (b) preferably contains the alicyclic skeleton (X') in an amount of 1 mol% or more, more preferably 1.3 mol% or more, even more preferably 1.6 mol% or more. The upper limit of the content of the alicyclic skeleton (X') is the same as the upper limit of the content of the alicyclic skeleton (X).

More specifically, in the case where isoprene is used as the conjugated diene compound, or in the case where butadiene is used, or in the case where both butadiene and isoprene are used together, the alicyclic skeleton content in each case is as follows.

In the case of using isoprene as the conjugated diene compound and where the polymer block (b) contains at least one alicyclic skeleton (X') having a combination of the substituents (v) and (vi) mentioned above, the total content of the alicyclic skeletons is, though not specifically limited but from the viewpoint of developing a more excellent vibration-damping effect and preventing reduction in cohesive and adhesive force even at high temperatures, preferably 1 mol% or more, more preferably 1.5 mol% or more, and is, from the viewpoint of attaining an excellent vibration-damping effect in a broad temperature range, even more preferably 2 mol% or more, further more preferably 3 mol% or more, further more preferably 4 mol% or more. The upper limit of the total content in the case of using isoprene is the same as the upper limit of the content of the alicyclic skeleton (X) mentioned above.

In the case of using butadiene as the conjugated diene compound and where the polymer block (b) contains the alicyclic skeleton (X), the content of the alicyclic skeleton (X) is, from the viewpoint of developing a more excellent vibration-damping effect and preventing reduction in cohesive and adhesive force even at high temperatures, preferably 5 mol% or more, more preferably 10 mol% or more, even more preferably 15 mol% or more, further more preferably 20 mol% or more, further more preferably 25 mol% or more, further more preferably 30 mol% or more. The upper limit of the content in the case of using butadiene is the same as the upper limit of the content of the alicyclic skeleton (X) mentioned above.

In the case of using both butadiene and isoprene as the conjugated diene compound and where the polymer block (b) contains at least one alicyclic skeleton (X') having a combination of the substituents (ii), (iii), (v) and (vi) mentioned above, the total content of the at least one alicyclic skeleton (X') is, from the viewpoint of developing a more excellent vibration-damping effect and preventing reduction in cohesive and adhesive force even at high temperatures, preferably 1 mol% or more, more preferably 2 mol% or more, even more preferably 5 mol% or more, further more preferably 8 mol% or more, further more preferably 13 mol% or more. The upper limit of the total content in the case of using both butadiene and isoprene is the same as the upper limit of the content of the alicyclic skeleton (X) mentioned above.

In the case of using both butadiene and isoprene as the conjugated diene compound and where the polymer block (b) contains at least one alicyclic skeleton (X) having a combination of the substituents (i) to (vi) mentioned above, the total content of the at least one alicyclic skeleton (X) is, from the viewpoint of developing a more excellent vibration-damping effect and preventing reduction in cohesive and adhesive force even at high temperatures, preferably 1 mol% or more, more preferably 5 mol% or more. The upper limit of the total content in the case of using both butadiene and isoprene is the same as the upper limit of the content of the alicyclic skeleton (X) mentioned above.

The content of the alicyclic skeleton (X) (including (X')) contained in the block copolymer or a hydrogenate thereof is a value obtained from the integrated value derived from the alicyclic skeleton (X) in the polymer block (b), by ¹³C-NMR measurement of the block copolymer, and more precisely, it is a value measured according to the method described in the section of Examples.

In ¹³C-NMR measurement of the hydrogenate, there are observed almost no peaks derived from the carbon atoms on the alicyclic skeleton (X), but in the case where the substituent R³ is a hydrocarbon group having 1 to 11 carbon atoms, there can be observed peaks derived from the carbon atoms on the alicyclic skeleton (X) bonding to the branched alkyl group derived from the vinyl group that has R³.

With that, therefore, in the case where the hydrogenation rate of the polymer block (b) for the hydrogenate is 85 to 99 mol%, it is possible to specifically define the content molar ratio of the carbon atom on the alicyclic skeleton (X) bonding to the branched alkyl group derived from the vinyl group that has R³ to the carbon atom on the main chain bonding to the vinyl group-derived branched alkyl group.

For example, in the alicyclic skeleton (X) having a combination of the substituents (iii) and (vi) mentioned above, the chemical shift in ¹³C-NMR of the carbon atom on the alicyclic skeleton (X) bonding to the isoprene group (in the following chemical formula (c)) appears at around 50.0 to 52.0 ppm, and the chemical shift in ¹³C-NMR of the carbon atom on the main chain bonding to the isoprene group (in the following chemical formula (d)) appears at around 43.0 to 45.0 ppm. With that, in the case where the hydrogenation rate is 40 to 99 mol%, the peak area ratio measured in ¹³C-NMR [peak area of a chemical shift value 50.0 to 52.0 ppm]/[peak area of a chemical shift value 43.0 to 45.0 ppm] generally falls within a range of 0.01 to 3.00, and from the viewpoint of developing more excellent vibration-damping performance, the area ratio is preferably within a range of 0.01 to 1.50, more preferably within a range of 0.01 to 1.00, even more preferably within a range of 0.01 to 0.50, further more preferably within a range of 0.01 to 0.25.

More precisely, the peak area ratio can be measured according to the method described in the section of Examples.

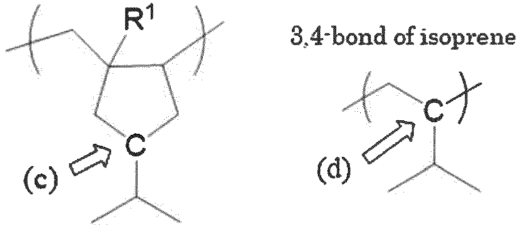

### [Other Structural Units]

The polymer block (b) may contain a structural unit derived from any other polymerizable monomer than the conjugated diene compound, so far as not interfering with the object and the advantageous effects of the present invention. In this case, in the polymer block (b), the content of the structural unit derived from the other polymerizable monomer than the conjugated diene compound is preferably less than 50 mol%, more preferably less than 30 mol%, even more preferably less than 20 mol%, further more preferably less than 10 mol%, and is especially preferably 0 mol%.

Examples of the other polymerizable monomer include aromatic vinyl compounds such as styrene, α-methylstyrene, o-methylstyrene, m-methylstyrene, p-methylstyrene, p-t-butylstyrene, 2,4-dimethylstyrene, N-vinylcarbazole, vinylnaphthalene and vinylanthracene, as well as at least one compound selected from the group consisting of methyl methacrylate, methyl vinyl ether, β-pinene, 8,9-p-menthene, dipentene, methylene-norbornene, 2-methylene-tetrahydrofuran, 1,3-cyclopentadiene, 1,3-cyclohexadiene, 1,3-cycloheptadiene and 1,3-cyclooctadiene.

The block copolymer has at least one polymer block (b). In the case where the block copolymer has two or more polymer blocks (b), the polymer blocks (b) may be the same or different.

### [Weight-Average Molecular Weight]

The weight-average molecular weight of the total of the polymer block (b) that the block copolymer has is, from the viewpoint of vibration-damping performance, moldability and the like in the form before hydrogenation, preferably 15,000 to 800,000, more preferably 50,000 to 700,000, even more preferably 70,000 to 600,000, further more preferably 90,000 to 500,000, and most preferably 130,000 to 450,000.

### [Content of Polymer Block (b)]

The content of the polymer block (b) in the block copolymer is preferably 70% by mass or more, more preferably 84% by mass or more, even more preferably 86% by mass or more. When the content of the polymer block (b) in the block copolymer is 70% by mass or more, the block copolymer may give a hydrogenate thereof having appropriate flexibility and excellent in vibration-damping performance not lowering the peak top intensity of tanδ. The upper limit is preferably 99% by mass or less, more preferably 97% by mass or less, even more preferably 94% by mass or less. When the content is 99% by mass or less, the block copolymer may give a hydrogenate thereof having mechanical characteristics and moldability suitable for various applications.

The content of the polymer block (b) in the block copolymer is a value measured in ¹H-NMR measurement, and more precisely, it is a value measured according to the method described in the section of Examples.

### «Production Method for Block Copolymer»

Regarding the method for producing the block copolymer, for example, at least one conjugated diene compound as a monomer may be polymerized according to an anionic polymerization method to form the polymer block (b) that has a structural unit containing the above-mentioned alicyclic skeleton (X) in the main chain. With that, a monomer for the polymer block (a) is added, and optionally a monomer for the polymer block (a) and a conjugated diene compound are successively further added to produce the block copolymer.

For the method of forming the alicyclic skeleton according to the anionic polymerization method, any known technique can be employed (for example, see US 3966691B). With depletion of the monomer, the alicyclic skeleton is formed at the terminal of the polymer, and the monomer is successively further added thereto to restart polymerization from the alicyclic skeleton. Consequently, depending on the successive addition time for the monomer, the polymerization temperature, or the kind and the amount of the catalyst used, a combination of the monomer and the catalyst and the like, presence or absence of formation of the alicyclic skeleton and the content thereof can be controlled. In the anionic polymerization method, an anionic polymerization initiator, a solvent and optionally a Lewis base can be used.

In the above-mentioned method, an organic lithium compound can be used as a polymerization initiator for the anionic polymerization, and examples thereof include methyl lithium, ethyl lithium, n-butyl lithium, sec-butyl lithium, tert-butyl lithium and pentyl lithium. A dilithium compound is also usable as a polymerization initiator, and examples thereof include naphthalene dilithium and dilithiohexylbenzene.

Examples of the coupling agent include dichloromethane, dibromomethane, dichloroethane, dibromoethane, dibromobenzene, and phenyl benzoate.

The amount to be used of these polymerization initiator and coupling agent can be appropriately determined depending on the desired weight-average molecular weight of the block copolymer and the hydrogenate thereof. In general, the initiator such as an alkyllithium compound and a dilithium compound is used preferably in a ratio of 0.01 to 0.2 parts by mass relative to 100 parts by mass of the total of the monomers such as the monomer of the polymer block (a) and the conjugated diene compound for use for polymerization. In the case where the coupling agent is used, the amount thereof to be used is preferably in a ratio of 0.001 to 0.8 parts by mass relative to 100 parts by mass of the total of the monomers.

The solvent is not specifically limited as far as not having any negative influence on the anionic polymerization reaction, and examples thereof include aliphatic hydrocarbons such as cyclohexane, methylcyclohexane, n-hexane and n-pentane; and aromatic hydrocarbons such as benzene, toluene and xylene. The polymerization reaction is carried out generally at a temperature of 0 to 100°C, preferably 10 to 70°C, for 0.5 to 50 hours, preferably 1 to 30 hours.

According to a method of adding a Lewis base as a cocatalyst in polymerization of the conjugated diene compound, the content of the alicyclic skeleton (X) in the polymer block (b) and the content of the 3,4-bond and the 1,2-bond therein can be increased.

Examples of the Lewis base include ethers such as dimethyl ether, diethyl ether, tetrahydrofuran, and 2,2-di(2-tetrahydrofuryl)propane (DTHFP); glycol ethers such as ethylene glycol dimethyl ether, diethylene glycol dimethyl ether, triethylene glycol dimethyl ether, and tetraethylene glycol dimethyl ether; amines such as triethylamine, N,N,N',N'-tetramethylenediamine, N,N,N',N'-tetramethylethylenediamine (TMEDA), and N-methylmorpholine; metal salts such as sodium or potassium salts of aliphatic alcohols such as sodium t-butylate, sodium t-amylate, or sodium isopentylate and sodium or potassium salts of alicyclic alcohols such as dialkylsodium cyclohexanolates, e.g., sodium metholate. One alone or two or more kinds of these Lewis bases can be used either singly or as combined.

The amount to be added of the Lewis base is determined depending on how the content of the alicyclic skeleton (X) is controlled, or especially in the case where the polymer block (b) contains a structural unit derived from isoprene and/or butadiene, depending on how the vinyl bond content of the isoprene unit and/or the butadiene unit constituting the polymer block (b) is controlled. Consequently, the amount to be added of the Lewis base is not limited in the strict sense of the word, but preferably falls within a range of 0.1 to 1,000 mols relative to 1 gram atom of lithium contained in the alkyllithium compound or the dilithium compound used as a polymerization initiator, more preferably within a range of 1 to 100 mols.

The average feed rate of the conjugated diene compound (hereinafter this may be referred to as "average diene feed rate") is, though not specifically limited but from the viewpoint of increasing the content of the alicyclic skeleton (X), preferably 150 kg/h or less per mol of the active terminal, more preferably 110 kg/h or less, even more preferably 55 kg/h or less, and may be 45 kg/h or less, or may be 30 kg/h or less, or may be 22 kg/h or less. The lower limit of the average feed rate of the conjugated diene compound is, though not specifically limited but from the viewpoint of increasing the productivity, preferably 1 kg/h or more relative to mol of the active terminal, more preferably 3 kg/h or more, even more preferably 5 kg/h or more, and may be 7 kg/h or more, or may be 10 kg/h or more, or may be 15 kg/h or more.

After polymerization according to the above-mentioned method, an active hydrogen compound such as alcohols, carboxylic acids or water is added to terminate the polymerization reaction to thereby give the block copolymer.

### «Hydrogenation»

The block copolymer produced according to the above-mentioned production method is subjected to hydrogenation, whereby the carbon-carbon double bond derived from the conjugated diene compound in the polymer block (b) in the block copolymer is hydrogenated to give a hydrogenate of the block copolymer.

The hydrogenation is performed, for example, in the presence of a hydrogenation catalyst in an inert organic solvent.

The hydrogenation may be carried out under a hydrogen pressure of 0.1 to 20 MPa or so, preferably 0.5 to 15 MPa, more preferably 0.5 to 5 MPa, at a reaction temperature of 20 to 250°C or so, preferably 50 to 180°C, more preferably 70 to 180°C, for a reaction time of generally 0.1 to 100 hours or so, preferably 1 to 50 hours.

Examples of the hydrogenation catalyst include a Raney nickel; a heterogeneous catalyst of a metal such as Pt, Pd, Ru, Rh or Ni supported by a carrier such as carbon, alumina or diatomaceous earth; a Ziegler catalyst of a combination of a transition metal compound and an alkylaluminum compound or alkyllithium compound; and a metallocene catalyst.

The resultant hydrogenate can be taken out by pouring the polymerization reaction solution into methanol or the like to precipitate, and then heating or vacuum drying the resultant precipitate, or by pouring the polymerization reaction solution into hot water along with steam and removing the solvent by azeotropic treatment for so-called steam stripping, and then heating or vacuum drying the residue.

The hydrogenation rate of the polymer block (b) is, though not specifically limited, preferably 85 to 99 mol%, more preferably 87 to 98 mol%, even more preferably 88 to 97 mol%. When the hydrogenation rate of the polymer block (b) is higher, the resultant hydrogenate can have improved heat resistance and weather resistance.

The hydrogenation rate is a value obtained by measuring the content of the carbon-carbon double bond in the structural unit derived from the conjugated diene compound and the alicyclic skeleton (X) in the polymer block (b) after hydrogenation by ¹H-NMR measurement, and more precisely, a value measured according to the method described in the section of Example.

### «Bonding Mode of polymer block (a) and polymer block (b) in block copolymer»

So far as the polymer block (a) and the polymer block (b) bond therein, the bonding mode thereof in the block copolymer is not limited, and may be any of a linear, branched or radial bonding mode or a bonding mode of a combination of two or more such bonding modes. Among these, preferably, the bonding mode of the polymer block (a) and the polymer block (b) is a linear bonding mode, and examples thereof, in which the polymer block (a) is expressed as A and the polymer block (b) is as B, include a diblock copolymer represented by A-B, a triblock copolymer represented by A-B-A or B-A-B, a tetrablock copolymer represented by A-B-A-B, a pentablock copolymer represented by A-B-A-B-A or B-A-B-A-B, and an (A-B)nZ-type copolymer (where Z represents a coupling agent residue, and n represents an integer of 3 or more). Among these, a linear triblock copolymer or a diblock copolymer is preferred, and from the viewpoint of flexibility, production easiness and the like, an A-B-A-type triblock copolymer is more preferred.

Specifically, the A-B-A-type triblock copolymer includes a styrene-hydrogenated butadiene/isoprene-styrene copolymer. Namely, it is preferable that the block copolymer contains at least a styrene-hydrogenated butadiene/isoprene-styrene copolymer.

Here, in the present specification, in the case where polymer blocks of the same type linearly bond via a difunctional coupling agent or the like, the bonding polymer blocks are taken as one polymer block. Accordingly, a polymer block which is naturally to be strictly expressed as Y-Z-Y (where Z represents a coupling residue) including the above-mentioned exemplifications is expressed as Y as a whole except the case to be differentiated from a single polymer block Y. In the present specification, the polymer block of this type that contains a coupling agent residue is taken as above, and therefore, for example, a block copolymer which contains a coupling agent residue and which is to be strictly expressed as A-B-Z-B-A (where Z represents a coupling agent residue) is expressed as A-B-A and is taken as an example of a triblock copolymer.

### «Total Content of polymer block (a) and polymer block (b) in block copolymer»

As far as not detracting from the object and the advantageous effects of the present invention, the block copolymer can contain a polymer block formed of any other monomer than the polymer blocks (a) and (b), but the total content of the polymer block (a) and the polymer block (b) is preferably 90% by mass or more, more preferably 95% by mass or more, and is especially preferably substantially 100% by mass. When the total content is 90% by mass or more, a block copolymer hydrogenate excellent in vibration-damping performance and moldability and capable of readily preventing reduction in cohesive and adhesive force even at high temperatures can be provided.

### «Content of Hydrogenated Aromatic Vinyl Compound-based Elastomer (B)»

The content of the hydrogenated aromatic vinyl compound-based elastomer (B) in the thermoplastic elastomer composition is not specifically limited so far as it is 1% by mass or more and 99% by mass or less relative to 100% by mass of the total amount of the thermoplastic elastomer composition, and can be appropriately controlled depending on the kind of the hydrogenated aromatic vinyl compound-based elastomer (B) and the use of the thermoplastic elastomer composition. The content of the hydrogenated aromatic vinyl compound-based elastomer (B) may be, relative to 100% by mass of the total amount of the thermoplastic elastomer composition, for example, 90% by mass or less, 75% by mass or less, 60% by mass or less, or 50% by mass or less, and may be 10% by mass or more, 25% by mass or more, 40% by mass or more, and 50% by mass or more.

### <<Weight-Average Molecular Weight of Hydrogenated Aromatic Vinyl Compound-based Elastomer (B)>>

A standard polystyrene-equivalent weight-average molecular weight (Mw), as determined through gel permeation chromatography, of the hydrogenated aromatic vinyl compound-based elastomer (B) is, though not specifically limited, preferably 30,000 to 300,000, more preferably 50,000 to 250,000, even more preferably 100,000 to 200,000. When the weight-average molecular weight of the hydrogenated aromatic vinyl compound-based elastomer (B) is 30,000 or more, heat resistance can be high, and when it is 300,000 or less, moldability can be good.

### <<Glass Transition Temperature Tg of Hydrogenated Aromatic Vinyl Compound-based Elastomer (B)>>

The glass transition temperature Tg of the hydrogenated aromatic vinyl compound-based elastomer (B) is not specifically limited so far as it is -10 to 40°C, but is preferably -7 to 35°C, more preferably -5 to 30°C, even more preferably -5 to 25°C.

When the glass transition temperature Tg of the hydrogenated aromatic vinyl compound-based elastomer (B) is lower than -10°C or higher than 40°C, vibration-damping performance in a practicable temperature range lowers.

When the glass transition temperature Tg of the hydrogenated aromatic vinyl compound-based elastomer (B) falls within the above-mentioned preferred range, high vibration-damping performance in a practicable temperature range can be developed.

### «Storage Elastic Modulus G' of Hydrogenated Aromatic Vinyl Compound-based Elastomer (B)»

A ratio of the storage elastic modulus G' at 0°C (G'(0°C)) to the storage elastic modulus G' at 50°C (G'(50°C)), (G'(0°C)/G'(50°C)) of the hydrogenated aromatic vinyl compound-based elastomer (B) is, though not specifically limited, preferably more than 10, more preferably 50 or more, even more preferably 100 or more.

When the ratio of the storage elastic modulus G' at 0°C (G'(0°C)) to the storage elastic modulus G' at 50°C (G'(50°C)), (G'(0°C)/G'(50°C)) of the hydrogenated aromatic vinyl compound-based elastomer (B) falls within the above range, high vibration-damping performance can be developed.

### <<tanδ of Hydrogenated Aromatic Vinyl Compound-based Elastomer (B)>>

### -peak top intensity and peak top temperature of tanδ-

Tanδ (loss tangent) is a ratio of loss elastic modulus to storage elastic modulus at a frequency 1 Hz in dynamic viscoelasticity measurement, and the peak top intensity and the peak top temperature of tanδ greatly contribute toward vibration-damping performance and other properties. Here, the peak top intensity of tanδ means a value of tanδ at which the peak of tanδ is maximum. The peak top temperature of tanδ means a temperature at which the peak of tanδ is maximum.

In the present specification, the peak top intensity and the peak top temperature of tanδ of the hydrogenated aromatic vinyl compound-based elastomer (B) are measured by pressurizing the hydrogenated aromatic vinyl compound-based elastomer (B) at a temperature of 230°C and under a pressure of 10 MPa for 3 minutes to give a single layer sheet having a thickness of 1.0 mm, cutting the single layer sheet into a disc, and using it as a test piece. The measurement conditions follow JIS K 7244-10 (2005), in which the strain is 0.1%, the frequency is 1 Hz, the measurement temperature ranges -70 to 100°C, and the heating rate is 3°C/min.

More precisely, the peak top intensity and the peak top temperature of the hydrogenated aromatic vinyl compound-based elastomer (B) are values measured according to the method described in the section of Examples.

By the above-mentioned measurement, the peak top intensity of tanδ of the hydrogenated aromatic vinyl compound-based elastomer (B) is preferably 1.0 or more, and may be higher of 1.5 or more, or may be further higher of 1.9 or more. A higher peak top intensity of tanδ indicates more excellent physical properties such as vibration-damping performance at the temperature, and when the peak top intensity of tanδ is 1.0 or more, sufficient vibration-damping performance can be developed in practicable environments.

The peak top temperature of tanS of the hydrogenated aromatic vinyl compound-based elastomer (B) is, though not specifically limited, preferably -50°C or higher, more preferably -40°C or higher, even more preferably -30°C or higher, further more preferably -25°C or higher, and may be 0°C or higher. The upper limit of the peak top temperature of tanδ may be any one, falling within a range not detracting from the advantageous effects of the present invention, and may be 50°C or lower, or may be 40°C or lower, or may be 35°C or lower. The range of the peak top temperature of tanδ of the hydrogenated aromatic vinyl compound-based elastomer (B) is, though not specifically limited, preferably -50 to 50°C, more preferably -40 to 40°C, even more preferably -30 to 30°C, further more preferably - 25 to 25°C. When the peak top temperature of tanδ is -50°C or higher, sufficient vibration-damping performance can be developed in practicable environments, and when it is 50°C or lower, desired adhesiveness can be developed in use as an adhesive layer.

### [Maximum Width of temperature range where tanδ is 1.0 or more]

The hydrogenated aromatic vinyl compound-based elastomer (B) has a series of temperature range in which tanδ measured within a range of -70 to 100°C under the above-mentioned measurement conditions is 1.0 or more. The maximum value of the temperature range is, though not specifically limited, preferably 12°C or higher, more preferably 13°C or higher, even more preferably 15°C or higher, further more preferably 17°C or higher.

In the case where the alicyclic skeleton (X) is incorporated in the main chain in the structural unit of the polymer block (b), the polymer block (b) can have a further higher vinyl bond content and therefore the glass transition temperature thereof increases since the molecular movement decreases, and accordingly, the glass transition mode can be gentler relative to temperature change. With that, the temperature range in which tanδ of the block copolymer hydrogenate (hydrogenated aromatic vinyl compound-based elastomer (B)) is 1 or more can be broader, that is, the thermoplastic elastomer composition can develop vibration- damping performance in a broader temperature range. When the maximum width of the temperature range in which tanδ can be 1.0 or more is 12°C or higher, or further 13°C or higher, more excellent vibration-damping performance can be developed in practicable environments.

### -Maximum Value of tanδ intensity at 0 to 40°C of hydrogenated aromatic vinyl compound-based elastomer (B)-

The maximum value of the tanδ intensity at 0 to 40°C of the hydrogenated aromatic vinyl compound-based elastomer (B) is not specifically limited and is preferably 1.0 or more, more preferably 1.5 or more, even more preferably 2.0 or more.

When the maximum value of the tanδ intensity of the hydrogenated aromatic vinyl compound-based elastomer (B) falls within the above range, vibration-damping performance can better.

The maximum value of the tanδ intensity of the hydrogenated aromatic vinyl compound-based elastomer (B) is a value measured according to the method described in the section of Examples.

In the case where the thermoplastic elastomer composition contains plural kinds of hydrogenated aromatic vinyl compound-based elastomer (B), the maximum value of the tanδ intensity of the thermoplastic elastomer composition composed of the plural kinds of hydrogenated aromatic vinyl compound-based elastomer (B) alone is referred to as the maximum value of the tanδ intensity at 0 to 40°C of the hydrogenated aromatic vinyl compound-based elastomer (B).

For example, as shown in Reference Example 1 given hereinunder, in the case where the thermoplastic elastomer composition contains 50 parts by mass of B-1 and 50 parts by mass of B-3, the maximum value of the tanδ intensity at 0 to 40°C of the hydrogenated aromatic vinyl compound-based elastomer (B) is 1.03.

### «Total Content of polyester-based thermoplastic elastomer (A) and hydrogenated aromatic vinyl compound-based elastomer (B)»

The thermoplastic elastomer composition of the present invention may contain additives to be mentioned below, in addition to the polyester-based thermoplastic elastomer (A) and the hydrogenated aromatic vinyl compound-based elastomer (B) within a range not interfering with the object and the advantageous effects of the present invention, but the total content of the polyester-based thermoplastic elastomer (A) and the hydrogenated aromatic vinyl compound-based elastomer (B) therein is preferably 90% by mass or more, more preferably 95% by mass or more, and is especially preferably substantially 100% by mass. When the total content is 90% by mass or more, the thermoplastic elastomer composition can have improved vibration-damping performance while retaining the properties inherent in the polyester-based thermoplastic elastomer.

### <Additives>

Examples of the additives that are optional components include a compatibilizer, other resins and other components.

### «Content»

In the case where the thermoplastic elastomer composition contains the above-mentioned additives, the content of the additives is not specifically limited and can be appropriately controlled depending on the kind of the additives and the use of the thermoplastic elastomer composition, and can be, for example, 50% by mass or less, 45% by mass or less, 30% by mass or less, 20% by mass or less, or 10% by mass or less, relative to 100% by mass of the total amount of the thermoplastic elastomer composition, and can be 0.01% by mass or more, 0.1% by mass or more, 1% by mass or more, or 5% by mass or more.

### «Compatibilizer»

The compatibilizer has an effect of compatibilizing the polyester-based thermoplastic elastomer (A) and the hydrogenated aromatic vinyl compound-based elastomer (B). The compatibilizing effect is obtained, for example, by reaction of the terminal functional group of the polyester-based thermoplastic elastomer (A), the terminal functional group of the hydrogenated aromatic vinyl compound-based elastomer (B) and the functional group (e.g., epoxy group) in the compatibilizer.

Preferred examples of the compatibilizer include an epoxy group-containing resin such as an epoxy group-containing ethylene-based copolymer and an epoxidized diene-based polymer. When an epoxy group-containing resin is used as a compatibilizer, a polar resin can be readily dispersed in the polyester-based thermoplastic elastomer (A) generally in a smaller amount than that of the other compatibilizer. When a compatibilizer differing from an epoxy group-containing resin is used, the amount to be used thereof may increase, but the compatibilizer can be more uniformly dispersed in the resin composition, and the advantage thereof is that the feeding amount can be readily stabilized in continuous production by extrusion molding or the like.

### [Epoxy Group-containing Ethylene-based Copolymer]

The epoxy group-containing ethylene-based copolymer is a copolymer containing a structural unit derived from ethylene and a structural unit derived from glycidyl methacrylate.

The content of the structural unit derived from glycidyl methacrylate in the epoxy group-containing ethylene-based copolymer is, though not specifically limited but from the viewpoint of compatibilization effect, preferably 3 to 30% by mass relative to 100% by mass of the mass of the copolymer, more preferably 5 to 25% by mass, even more preferably 10 to 20% by mass.

The content of the structural unit derived from glycidyl methacrylate can be measured in infrared spectrophotometry.

The epoxy group-containing ethylene-based copolymer may be an epoxy group-containing ethylene-based copolymer composed of a structural unit derived from ethylene and a structural unit derived from glycidyl methacrylate alone, but may be an epoxy group-containing ethylene-based copolymer containing a structural unit derived from ethylene and a structural unit derived from glycidyl methacrylate and further containing a structural unit derived from at least one compound selected from a compound represented by the following formula (1) and a compound represented by the following formula (2).

CH₂=CR⁴R⁵ (1)

CHR⁶=CHR⁷ (2)

wherein,
R⁴ represents a hydrogen atom, or an alkyl group having 1 to 8 carbon atoms,
R⁵ represents a halogen atom, or a group represented by -COOR⁸ where R⁸ represents an alkyl group having 1 to 8 carbon atoms,
R⁶ represents a hydrogen atom, an alkyl group having 1 to 8 carbon atoms, or a group represented by -COOR⁹ where R⁹ represents an alkyl group having 1 to 8 carbon atoms,
R⁷ represents an alkylnitrile, alkylether group or alkylamide having 1 to 8 carbon atoms, a halogen atom, a phenyl group or a group represented by -COOR¹⁰ where R¹⁰ represents an alkyl group having 1 to 8 carbon atoms, or R¹⁰ represents a group represented by -OCOR¹¹ where R¹¹ represents an alkyl group having 1 to 8 carbon atoms.

Examples of the compound represented by the formula (1) include propylene, 1-butene, vinyl acetate, acrylic acid, methacrylic acid, methyl acrylate, ethyl acrylate, methyl methacrylate, ethyl methacrylate, vinyl chloride, vinylidene chloride, styrene, acrylonitrile, isobutyl vinyl ether, and acrylamide. One alone or two or more kinds of these may be used either singly or as combined. Among these, vinyl acetate, methyl acrylate and methyl methacrylate are preferred.

Examples of the compound represented by the formula (2) include dimethyl maleate, diethyl maleate, dimethyl fumarate, and diethyl fumarate.

In the case where the epoxy group-containing ethylene-based copolymer is composed of a structural unit derived from ethylene, a structural unit derived from glycidyl methacrylate, and a structural unit derived from a compound represented by the formula (1) or the formula (2), the content of the monomer unit derived from a compound represented by the formula (1) or the formula (2) is not specifically limited but is preferably 40% by mass or less relative to 100% by mass of the copolymer, more preferably 30% by mass or less. In the above case, the content of the monomer unit derived from glycidyl methacrylate is not also specifically limited but is preferably 2 to 20% by mass of 100% by mass of the copolymer, more preferably 3 to 10% by mass, even more preferably 5 to 7% by mass.

Examples of the epoxy group-containing ethylene-based copolymer include ethylene-glycidyl methacrylate copolymer, ethylene-propylene-glycidyl methacrylate copolymer, ethylene-butene-1-glycidyl methacrylate copolymer, ethylene-vinyl acetate-glycidyl methacrylate copolymer, ethylene-acrylic acid-glycidyl methacrylate copolymer, ethylene-methacrylic acid-glycidyl methacrylate copolymer, ethylene-methyl acrylate-glycidyl methacrylate copolymer, ethylene-ethyl acrylate-glycidyl methacrylate copolymer, ethylene-methyl methacrylate-glycidyl methacrylate copolymer, ethylene-ethyl methacrylate-glycidyl methacrylate copolymer, ethylene-methyl maleate-glycidyl methacrylate copolymer, ethylene-ethyl maleate-glycidyl methacrylate copolymer, ethylene-methyl fumarate-glycidyl methacrylate copolymer, ethylene-ethyl fumarate-glycidyl methacrylate copolymer, ethylene-vinyl chloride-glycidyl methacrylate copolymer, ethylene-vinylidene chloride-glycidyl methacrylate copolymer, ethylene-styrene-glycidyl methacrylate copolymer, ethylene-acrylonitrile-glycidyl methacrylate copolymer, ethylene-isobutyl vinyl ether-glycidyl methacrylate copolymer, and ethylene-acrylamide-glycidyl methacrylate copolymer. One alone or two or more kinds of these may be used either singly or as combined. Among these, ethylene-glycidyl methacrylate copolymer (e.g., Bond Fast BF-E by Sumitomo Chemical Co., Ltd., ethylene unit: 88% by mass, glycidyl methacrylate unit: 12% by mass), and ethylene-methyl acrylate-glycidyl methacrylate copolymer (e.g., Bond Fast BF-7M by Sumitomo Chemical Co., Ltd., ethylene unit: 67% by mass, glycidyl methacrylate unit: 6% by mass, methyl acrylate unit: 27% by mass) are preferred.

The epoxy group-containing ethylene-based copolymer can be synthesized in various methods. For example, the copolymer can be produced in bulk polymerization, emulsion polymerization or solution polymerization using a free radical initiator.

Typical polymerization methods are methods described in JP48-11388A and JP61-127709A, and a method of copolymerization in the presence of a polymerization initiator that generates a free radial, under the condition of a pressure of 500 kg/cm² or more and a temperature of 40 to 300°C.

Other production methods are a method of mixing an unsaturated epoxy compound and a radical generator in a polymer that contains an ethylene-derived structural unit and optionally contains a structural unit derived from a compound represented by the general formula (1) or (2) followed by copolymerizing them in a mode of melt graft-copolymerization in an extruder, and a method of copolymerizing ethylene and an unsaturated epoxy compound and optional components represented by the formula (1) or (2), in water or in an inert medium such as an organic solvent in the presence of a radical generator.

### [Epoxidized Diene-based Polymer]

The epoxidized diene-based polymer is a polymer with an epoxy group introduced into the molecule by epoxidation of a diene-based polymer with an epoxidizing agent. The diene-based polymer for use for the epoxidized diene-based polymer includes a butadiene polymer, a styrene-butadiene copolymer, an isoprene polymer, a styrene-isoprene copolymer, and an acrylonitrile-butadiene copolymer. One alone or two or more kinds of these may be used either singly or as combined. Among these, an epoxidized styrene-butadiene block copolymer having used a styrene-butadiene copolymer is especially preferred from the viewpoint of improving compatibility.

Examples of the epoxidized styrene-butadiene block copolymer include epoxidized styrene-butadiene block copolymers represented by the following general formula (3) or (4).

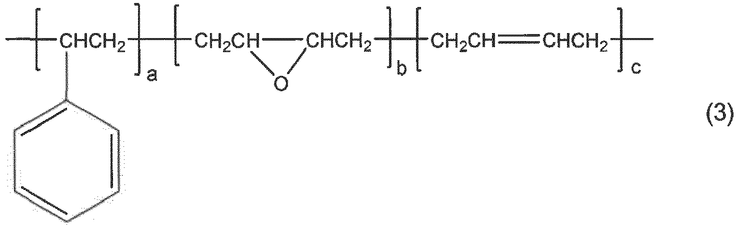

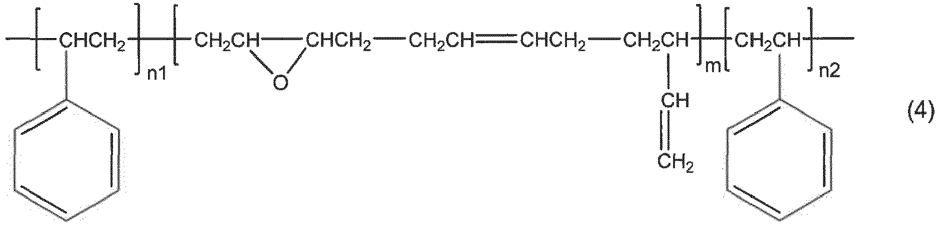

Commercial products of the epoxidized styrene-butadiene block copolymer include Epofriend AT501 and Epofriend CT310 by Daicel Corporation.

### [Amount to be added of Compatibilizer]

The amount to be added of the compatibilizer is, though not specifically limited, preferably 0.1 parts by mass to 20 parts by mass relative to 100 parts by mass of the total of the polyester-based thermoplastic elastomer (A) and the hydrogenated aromatic vinyl compound-based elastomer (B), more preferably 0.5 parts by mass to 10 parts by mass, even more preferably 1 part by mass to 5 parts by mass.

### «Other Resins»

Examples of the other resins include olefin resin; polyisoprene; polybutadiene; vulcanized ethylene-propylene-diene copolymer; styrene-butadiene rubber; styrene-isoprene rubber; nitrile rubber, butyl rubber; natural rubber; ethylene-vinyl acetate copolymer; ethylene-(meth)acrylate copolymer; ethylene-ethyl (meth)acrylate copolymer; metal-ion crosslinked resin (ionomer) of ethylene-(meth)acrylic acid copolymer; styrene-based resin such as polystyrene, AS resin and ABS resin; polyphenylene ether-based resin; polyamide resin such as nylon 6 and nylon 66, polyester resin such as polyethylene terephthalate and polybutylene terephthalate; polyurethane resin; acetal resin such as polyoxymethylene homopolymer and polyoxymethylene copolymer; acrylic-based resin such as polymethyl methacrylate-based resin; polyvinyl chloride; vinyl chloride-vinyl acetate copolymer; and ethylene-vinyl chloride-vinyl acetate copolymer.

### «Other Components»

Examples of the other components include a crosslinking agent (e.g., isocyanate-based crosslinking agent, epoxy-based crosslinking agent, metal chelate-based crosslinking agent, aziridine-based crosslinking agent, amine resin), a heat stabilizer, a light stabilizer, a UV absorbent, an IR absorbent, an antioxidant, a lubricant agent, a colorant, an antistatic agent, a flame retardant, a water repellant, a waterproofing agent, a hydrophilizing agent, an electroconductivity imparting agent, a thermal conductivity imparting agent, an electromagnetic wave shieldability imparting agent, a transparency controlling agent, a fluorescent agent, a slidability imparting agent, a transparency imparting agent, an antiblocking agent, a metal deactivator, an antibacterial agent, a crystal nucleating agent, a crack preventing agent, an ozone degradation preventing agent, a rat poison, a dispersant, a tackifier, a light-proofing agent, a weather-proofing agent, a copper inhibitor, a reinforcing agent, an antifungal agent, a macrocyclic molecule (e.g., cyclodextrin, calixarene, cucurbituril), and other pressure-sensitive adhesives than the above-mentioned tackifying resin (e.g., acrylic pressure-sensitive adhesive). One or more of these may be used.

### <tanδ intensity of thermoplastic elastomer composition>

A maximum value of the tanδ intensity of the thermoplastic elastomer composition of the present invention is not specifically limited, and is preferably 0.1 or more at 0 to 40°C, more preferably 0.13 or more, even more preferably 0.15 or more.

When the tanδ intensity of the thermoplastic elastomer composition falls within the above range, vibration-damping performance can better.

More precisely, the tanδ intensity is a value measured according to the method described in the section of Examples.

A ratio of the maximum value of the tanδ intensity at 0 to 40°C of the hydrogenated aromatic vinyl compound-based elastomer (B) to the maximum value of the tanδ intensity at 0 to 40°C of the polyester-based thermoplastic elastomer (A), (tanδ(B)max/tanδ(A)max) is not specifically limited but is preferably 10 to 80, more preferably 12 to 40, even more preferably 14 to 35.

When the ratio (tanδ(B)max/tanδ(A)max) falls within the above range, the vibration-damping performance of the thermoplastic elastomer composition can better.

### (Vibration-Damping Material)

The vibration-damping material of the present invention is characterized by containing the thermoplastic elastomer composition of the present invention.

The vibration-damping material is for damping vibration and sound noise in various structures to keep silence, and is, for example, widely used under the indoor floors of automobiles, and also for railcars, ships, aircrafts, as well as electric appliances, building structures and construction equipment.

### <Content>

The content of the thermoplastic elastomer composition in the vibration-damping material is, though not specifically limited but from the viewpoint of the performance as a vibration-damping material, preferably 10% by mass or more, more preferably 30% by mass or more, even more preferably 50% by mass or more. The upper limit of the content of the thermoplastic elastomer composition in the vibration-damping material is not specifically limited within a range not detracting from the advantageous effects of the present invention, and may be 100% by mass, but is, from the viewpoint of economic efficiency, preferably 90% by mass or less, more preferably 80% by mass or less, even more preferably 70% by mass or less.

### (Gear)

The gear of the present invention is characterized by containing the thermoplastic elastomer composition of the present invention.

The kind of the gear of the present invention is not specifically limited, and examples thereof include a noiseless gear, a head-lamp actuator gear, and an HVAC gear.

### <Content>

The content of the thermoplastic elastomer composition in the gear is, though not specifically limited but from the viewpoint of the performance as a gear, preferably 10% by mass or more, more preferably 30% by mass or more, even more preferably 50% by mass or more. The upper limit of the content of the thermoplastic elastomer composition in the gear is not specifically limited within a range not detracting from the advantageous effects of the present invention, and may be 100% by mass, but is, from the viewpoint of economic efficiency, preferably 90% by mass or less, more preferably 80% by mass or less, even more preferably 70% by mass or less.

### (Composite Molded Object)

The composite molded object of the present invention is characterized in that a thermoplastic elastomer composition layer containing the thermoplastic elastomer composition bonds by fusion to a polar resin layer containing a polar resin.

### <Thermoplastic Elastomer Composition Layer>

The thermoplastic elastomer composition layer is a layer that contains the thermoplastic elastomer composition of the present invention.

The content of the thermoplastic elastomer composition in the thermoplastic elastomer composition layer is, though not specifically limited but from the viewpoint of the performance as a thermoplastic elastomer composition layer, preferably 50% by mass or more, more preferably 70% by mass or more, even more preferably 75% by mass or more. The upper limit of the content of the thermoplastic elastomer composition in the thermoplastic elastomer composition layer is not specifically limited within a range not detracting from the advantageous effects of the present invention, and may be 100% by mass, but is, from the viewpoint of economic efficiency, preferably 90% by mass or less, more preferably 85% by mass or less, even more preferably 80% by mass or less.

### <Polar Resin Layer>

The polar resin layer is a layer that contains a polar resin.

The content of the polar resin in the polar resin layer is, though not specifically limited but from the viewpoint of the performance as a polar resin layer, preferably 50% by mass or more, more preferably 70% by mass or more, even more preferably 80% by mass or more.

### «Polar Resin»

The polar resin indicates, for example, (i) a resin having a polar group such as a carboxy group, a sulfonic acid group, a hydroxy group or a cyano group, (ii) a resin having an ether bond, an ester bond, an amide bond or a sulfide bond in the resin, or (iii) a resin having at least one of oxygen, nitrogen, sulfur or halogen in the molecule, and is a resin that generates electronic polarization in the molecule and has thermosplasticity.

Specific examples of the polar resin include polyamide resins such as nylon 6, nylon 66, nylon 610, nylon 9, nylon 6/66, nylon 66/610, nylon 6/11, nylon 6/12, nylon 12, nylon 46, and amorphous nylon; polyester resins such as polyethylene terephthalate, polyethylene naphthalate, and polybutylene terephthalate; polyacetal resins such as polyoxymethylene homopolymer, and polyoxymethylene copolymer; polyphenylene sulfide resins; polyurethane resins; polyvinyl alcohol resins; polycarbonate resins; ethylene-vinyl acetate copolymers; ethylene-methacrylic acid copolymers; polyether ketones; polyether ether ketones; polyvinyl chloride; polyvinylidene chloride; polyacrylonitrile; vinylon; triacetyl cellulose; ABS resins; AS resins; ACS resins; xylene resins; and acrylic resins. One alone or two or more kinds of these polar resins may be used either singly or as combined. Among these, polyamide resins, polyester resins, polyacetal resins, polyphenylene sulfide resins, polyurethane resins, polyvinyl alcohol resins, and polycarbonate resins are preferred.

Preferably, at least one of the glass transition temperature or the melting point of the polar resin is 80°C or higher, more preferably 100°C or higher, even more preferably 150°C or higher. Here, the melting point is measured with a DSC measurement device.

When at least one of glass transition temperature or the melting point falls within the above range, the mechanical properties of the polar resin are good.

### <Production Method for Composite Molded Object>

As the production method for the composite molded object, for example, various molding methods are employable, including an insert injection molding method, a two-color injection molding method, a T-die laminate molding method, a coextrusion molding method, a blow molding method, a core back injection molding method, a sandwich injection molding method, and an injection compression molding method.

### «Insert Injection Molding Method»

An insert injection molding method is a molding method of previously molding a core (polar resin) by injection molding, extrusion molding, sheet molding, film molding or the like, then inserting the shaped molded article into a die, and thereafter injecting a surface material (thermoplastic elastomer composition) into the space between the molded article and the die for injection molding therein; or a molding method of previously molding a thermoplastic elastomer composition by injection molding, extrusion molding, sheet molding, film molding or the like, then inserting the shaped molded article into a die, and thereafter injecting a polar resin in the space between the molded article and the die for injection molding therein.

### <<Two-color Injection Molding Method, Core Back Injection Molding Method>>

A two-color injection molding method is a molding method of injection-molding a polar resin using two or more injection-molding machines, then exchanging the cavity of a die by rotation or movement of the die to thereby form a space between the molded article and the die, and thereafter injecting a thermoplastic elastomer composition into the resultant space for injection molding therein. A core back injection molding method is a molding method of injection-molding a polar resin using one injection-molding machine and one die, then enlarging the cavity space of the die, and injecting a thermoplastic elastomer resin into the space between the molded article and the die for injection molding therein.

An ordinary injection molding method may also be employed for molding a polar resin, or gas injection molding is also employable.

The injection-molding temperature of the polar resin is, though not specifically limited, preferably 100 to 300°C, more preferably 150 to 280°C.

Also not specifically limited, the injection-molding pressure for the polar resin is preferably 50 to 1,000 kg/cm², more preferably 100 to 800 kg/cm².

The average thickness of the polar resin layer in the injection-molded article is, though not specifically limited, preferably 0.5 to 6 mm. Falling within the above range, the polar resin layer can be prevented from shrinking so that the smoothness of the surface of the molded article can be bettered and, in addition, can satisfy mechanical properties such as stiffness and strength, as well as heat resistance and durability that are needed, for example, in use as interior parts for automobiles.

Also not specifically limited, the average thickness of the thermoplastic elastomer composition layer is preferably 1 to 5 mm. Falling with the above range, soft feeling can be bettered, and in addition, adhesiveness between the polar resin and the thermoplastic elastomer composition can also be bettered.

Also not specifically limited, the injection-molding temperature of the thermoplastic elastomer composition layer is preferably 150 to 300°C, more preferably 200 to 290°C, and especially preferably 220 to 280°C.

The injection-molding pressure for the thermoplastic elastomer composition layer is, though not specifically limited, preferably 50 to 1,000 kg/cm², more preferably 100 to 800 kg/cm².

The thus-produced, composite molded object can be used as various industrial members. Specifically, it can be used as automobile interior members such as instrument panel, center panel, center console box, door trim, pillar, assisting grip, handle and air bag cover, automobile exterior members such as molding, automobile functional members such as rack and pinion boot, suspension boot and constant velocity joint boot, household electric appliance members such as vacuum cleaner bumper, remote control switch, and various key tops of OA appliances, subaqueous use products such as swimming goggles and underwater camera covers, various cover members, various industrial members with packing for sealability, waterproofness, sound absorption and vibration absorption, electric and electronic members such as curl cord wire covering, belts, hoses, tubes and sound attenuation gears, and sports goods.

### Examples

Hereinunder the present invention is described more concretely with reference to Examples and Comparative Examples, but the present invention is not restricted to these.

### <Hydrogenated Aromatic Vinyl Compound-based Elastomer (B)>

Physical properties evaluation methods for the hydrogenated aromatic vinyl compound-based elastomer (B) produced in Production Examples given hereinunder are shown below.

### (1) Content of polymer block (a)

An unhydrogenated block copolymer was dissolved in CDCl₃, and by ¹H-NMR measurement [device: "ADVANCE 400 Nano bay" (by Bruker Corporation), measurement temperature: 30°C)], the content of the polymer block (a) therein was calculated from the ratio of a peak intensity derived from styrene as an aromatic vinyl compound and a peak intensity derived from a diene.

### (2) Weight-average molecular weight (Mw)

By gel permeation chromatography (GPC) measurement under the conditions mentioned below, the polystyrene-equivalent weight-average molecular weight (Mw) of the hydrogenated aromatic vinyl compound-based elastomer (B) was determined.

### <<GPC measurement device and Measurement conditions>>

| | |
|---|---|
| Device | : GPC device "HLC-8020" (by Tosoh Corporation) |
| Separation column | : "TSKgel GMHXL", "G4000HXL" and "G5000HXL" all by Tosoh Corporation were connected in series. |
| Eluent | : Tetrahydrofuran |
| Eluent flow rate | : 0.7 mL/min |
| Sample concentration | : 5 mg/10 mL |
| Column temperature | : 40°C |
| Detector | : Differential refractive index (RI) detector |
| Calibration curve | : Drawn with standard polystyrene |

### (3) Hydrogenation rate of polymer block (b)

By ¹H-NMR measurement, the hydrogenation rate was calculated from the ratio of a peak area derived from the residual olefin of isoprene and/or butadiene to a peak area derived from ethylene, propylene and/or butylene.
Device: Nuclear magnetic resonance device "ADVANCE 400 Nano bay" (by Bruker Corporation)
Solvent: CDCl₃

### (4) Vinyl bond content in polymer block (b)

An unhydrogenated block copolymer was dissolved in CDCl₃, and analyzed by ¹H-NMR measurement [device: "ADVANCE 400 Nano bay" (by Bruker Corporation), measurement temperature: 30°C)]. From the ratio of a peak area corresponding to the 3,4-bond unit and the 1,2-bond unit in the isoprene structural unit, or the 1,2-bond unit in the butadiene structural unit, or the bonding units of the two in the case of a structural unit derived from a mixture of isoprene and butadiene, to a total peak area of structural units derived from isoprene and/or butadiene, the vinyl bond content (total content of the 3,4-bond unit and the 1,2-bond unit) was calculated.

### (5) Content of alicyclic skeleton (X) in polymer block (b)

600 mg of an unhydrogenated block copolymer and 40 mg of Cr(acac)₃ were dissolved in 4 mL of CDCl₃, and using a 10-mm NMR tube, this was subjected to quantitative ¹³C-NMR measurement (pulse program: zgig, Inverse gated ¹H decoupling method) [device: "ADVANCE 400 Nano bay" (by Bruker Corporation), measurement temperature: 30°C)]. According to the method mentioned below, the content of the alicyclic skeletons X, X1 and X2 in the polymer block (B) was calculated.

In Table 3, X, X1 and X2 each are the following alicyclic skeleton.

X: Alicyclic skeleton having a combination of substituents of the following (i) to (vi).

X1: Alicyclic skeleton having a combination of substituents of the following (i) and (iv).

X2: Alicyclic skeleton having a combination of substituents of the following (ii), (iii), (v) and (iv).
(i) : R¹= hydrogen atom, R²= hydrogen atom, R³= hydrogen atom; (1,2Bd+Bd)
(ii): R¹= hydrogen atom, R²= methyl group, R³= hydrogen atom; (1,2Bd+1,2Ip)
(iii): R¹= hydrogen atom, R²= hydrogen atom, R³= methyl group; (1,2Bd+3,4Ip)
(iv): R¹= methyl group, R²= hydrogen atom, R³= hydrogen atom; (1,2Ip+Bd)
(v): R¹= methyl group, R²= methyl group, R³= hydrogen atom; (1,2Ip+1,2Ip)
(vi): R¹= methyl group, R²= hydrogen atom, R³= methyl group; (1,2Ip+3,4Ip)

### [Calculation method]

Table 1-1 shows each peak and the derived structure. When the integrated value of each peak is represented by a to g, the integrated value of each structure can be as shown in Table 1-2. The content of X, X1 and X2 each can be calculated as (a+g-c)/(a+b+c-d+e/2+2f), (g-c)/(a+b+c-d+e/2+2f), and a/(a+b+c-d+e/2+2f), respectively.

**Table 1-1**

| Peak (ppm) | Structure | Integrated Value |
|---|---|---|
| 108 -110 | X2 | a |
| 110 -113 | 3,4Ip + 1,2Ip + X1 | b |
| 113 -116 | 1,2Bd | c |
| 122 - 127 | 1,4Ip + St | d |
| 127 - 132 | 1,4Bd x 2 + St x 4 | e |
| 132 - 137 | 1,4Ip | f |
| 142 - 145 | 1,2Bd +X1 | g |

**Table 1-2**

| Structure | Integrated Value |
|---|---|
| St | d-f |
| 1,4Ip | f |
| 3,4Ip + 1,2Ip | b - (g - c) |
| 1,4Bd | (e - (d - f) × 4) / 2 |
| 1,2Bd | c |
| X1 | g - c |
| X2 | a |
| Total | a + b + c - d + e / 2 + 2f |

### (6) Glass transition temperature Tg (°C)

The glass transition temperature (Tg) of the hydrogenated aromatic vinyl compound-based elastomer (B) of Production Examples 1 to 3 was measured according to the following method.

### [Measurement of glass transition temperature (Tg)]

This was measured according to JIS K7121:2012. For the measurement, a differential scanning calorimeter (DSC) (DSC250 by TA) was used. Regarding the measurement conditions for the DSC curve, the sample was once heated up to 230°C, then cooled down to -90°C, and thereafter again heated from -90°C to 230°C at a rate of 10°C/min. On the DSC curve in the second time heating, an intermediate point glass transition temperature was read, and the intermediate point glass transition temperature is the glass transition temperature (Tg) of the measured sample.

### (7) Peak top temperature and peak top intensity of tanδ, and maximum width of temperature range where tanδ is 1.0 or more

For the following measurement, the hydrogenated aromatic vinyl compound-based elastomer (B) was pressurized at a temperature of 230°C and under a pressure of 10 MPa for 3 minutes to give a single layer sheet having a thickness of 1.0 mm. The single layer sheet was cut into a disc, and this was used as a test sheet.

For the measurement, according to JIS K 7244-10 (2005), a strain control type dynamic viscoelasticity device "ARES-G2" (by TA Instrument Japan Corporation) having a disc diameter of 8 mm was used as a parallel flat plate type oscillation rheometer.

The gap between the two flat plates was fully filled up with the above test sheet, and at a strain amount of 0.1%, oscillation at a frequency of 1 Hz was given to the test sheet. By heating this from -70°C to 100°C at a constant rate of 3°C/min, a maximum value of the peak intensity (peak top intensity) of tanδ and the temperature (°C) at which the maximum value was given (peak top temperature (°C)) were determined. In addition, the maximum value of the tanδ intensity at 0 to 40°C of the hydrogenated aromatic vinyl compound-based elastomer (B) was determined. Further, the maximum width (°C) of the temperature range in which tanδ was 1.0 or more was determined. A larger value thereof indicates more excellent vibration-damping performance.

### (8) G' ratio of hydrogenated aromatic vinyl compound-based elastomer (B) (G'(0°C)/G'(50°C))

G' ratio (G'(0°C)/G'(50°C)) of the hydrogenated aromatic vinyl compound-based elastomer (B) of Production Examples 1 to 3 was measured as follows. The hydrogenated aromatic vinyl compound-based elastomer (B) was pressurized at a temperature of 230°C and under a pressure of 10 MPa for 3 minutes to give a single layer sheet having a thickness of 1.0 mm, and the single layer sheet was cut into a disc to be a test sheet. According to JIS K 7244-10 (2005), the test sheet was analyzed using a strain control type dynamic viscoelasticity device "ARES-G2" (by TA Instrument Japan Corporation) having a disc diameter of 8 mm as a parallel flat plate type oscillation rheometer.

### [Production Example 1]

### Production of hydrogenated aromatic vinyl compound-based elastomer (B)

50 kg of a solvent, cyclohexane and 87 g of a cyclohexane solution of an anionic polymerization initiator, sec-butyllithium having a concentration of 10.5% by mass (substantial amount added of sec-butyllithium: 9.1 g) were fed into a nitrogen-purged and dried pressure-resistant container.

The pressure-resistant container was heated up to 50°C, then 1.0 kg of styrene (1) was added and polymerized for 1 hour, at a container inner temperature of 50°C, 63 g of a Lewis base, 2,2-di(2-tetrahydrofuryl)propane (DTHFP) was added, a mixture liquid of 8.16 kg of isoprene and 6.48 kg of butadiene was added at an average diene feed speed shown in Table 2, taking 5 hours, and then these were polymerized for 2 hours, and further 1.0 kg of styrene (2) was added and polymerized for 1 hour to give a reaction solution containing a polystyrene-poly(isoprene-butadiene)-polystyrene triblock copolymer.

A Ziegler-type hydrogenation catalyst formed from nickel octylate and trimethylaluminum was added to the reaction solution under a hydrogen atmosphere, and reacted under the condition of a hydrogen pressure of 1 MPa and 80°C for 5 hours. The reaction solution was left cooled and left depressurized, and then washed with water to remove the catalyst, and dried in vacuum to obtain a hydrogenate of the polystyrene-poly(isoprene-butadiene)-polystyrene triblock copolymer (hydrogenated aromatic vinyl compound-based elastomer (B)).

The raw materials and the amount used thereof (kg) are shown in Table 2. The results of physical properties evaluation are shown in Table 3.

### [Production Examples 2 to 3]

### Production of hydrogenated aromatic vinyl compound-based elastomer (B)

Block copolymer hydrogenates (hydrogenated aromatic vinyl compound-based elastomers (B)) were produced in the same manner as in Production Example 1 except that the components and the amount to be used thereof, and the reaction conditions were changed as in Table 2. The results of physical properties evaluation are shown in Table 3.

**Table 2**

| | | | Production Example | | |
|---|---|---|---|---|---|
| | | | 1 | 2 | 3 |
| Hydrogenated Aromatic Vinyl Compound-based Elastomer (B) | | | B-1 | B-2 | B-3 |
| Amount Used (kg) | Cyclohexane | | 50 | 50 | 50 |
| | Sec-butyllithium (10.5 mass% cyclohexane solution) | | 0.087 | 0.087 | 0.087 |
| | (a) | Styrene (1) | 1.0 | 1.0 | 0.5 |
| | | Styrene (2) | 1.0 | 1.0 | 1.5 |
| | (b) | Isoprene | 8.16 | 14.64 | 8.16 |
| | | Butadiene | 6.48 | 0 | 6.48 |
| | Others | Tetrahydrofuran | 0 | 0 | 0.31 |
| | | DTHFP | 0.063 | 0.032 | 0 |

**Table 3**

| | Production Example | | |
|---|---|---|---|
| | 1 | 2 | 3 |
| Hydrogenated aromatic vinyl compound-based elastomer (B) | B-1 | B-2 | B-3 |
| Structural unit of polymer block (a) | St | St | St |
| Components constituting polymer block (b) | Ip/Bd | Ip | Ip/Bd |
| Ratio by mass of components constituting polymer block (b) | 55/45 | 100 | 55/45 |
| Ratio by mol of components constituting polymer block (b) | 50/50 | 100 | 50/50 |
| Polymer structure | A/B/A | A/B/A | A/B/A |
| Content (% by mass) of polymer block (a) | 12 | 12 | 12 |
| Weight-average molecular weight of hydrogenated aromatic vinyl compound-based elastomer (B) | 150,000 | 150,000 | 163,000 |
| Hydrogenation rate (mol%) of polymer block (b) | 97 | 90 | 91 |
| Vinyl bond content (mol%) in polymer block (b) | 76 | 83 | 64 |
| X1 in polymer block (b) or hydrogenate content (mol%) in X1 | 3 | 0 | 0 |
| X2 in polymer block (b) or hydrogenate content (mol%) in X2 | 5 | 1 | 2 |
| X in polymer block (b) or hydrogenate content (mol%) in X | 8 | 1 | 2 |
| Glass transition temperature Tg (°C) | -1 | 20 | -30 |
| Peak top temperature (°C) of tanδ | 10 | 31 | -20 |
| Peak top intensity of tanδ | 2.2 | 2.1 | 2.2 |
| Maximum value of tanδ intensity at 0°C to 40°C | 2.2 | 2.1 | 0.37 |
| Maximum width (°C) of temperature range where tanδ≥1 | 17.9 | 20.7 | 14.6 |
| G' ratio (G'(0°C)/G'(50°C)) | 770 | 530 | 1 |

### [Examples 1 to 10 and Comparative Examples 1 and 2, and Reference Example]

The hydrogenated aromatic vinyl compound-based elastomers (B) of Production Examples 1 and 2 have a peak top intensity of tanδ of 1.0 or more, and have a peak top temperature of tanδ in a broad temperature range, and therefore can be said to be favorable for wide-range applications as a vibration-damping material.

Constituent ingredients (part by mass) for a thermoplastic elastomer composition shown in Table 4 and Table 5 were put into Brabender ("Plastograph EC: 50 cc mixer" by Brabender Corporation), and melt-kneaded therein at a cylinder temperature of 240°C and at a screw rotation number of 100 rpm for 3 minutes, and then the resultant composition was compression-molded (240°C, 2 minutes) to form sheets (thickness 1 mm). Tanδ intensity of the thus-produced sheets (thickness 1 mm) was measured according to the following method. The test pieces used for measurement of the tanδ intensity were used to measure the dispersion diameter (µm) according to the following method.

### [Measurement of dispersion diameter]

The test piece used for measurement of tanδ was frozen and broken using liquid nitrogen, then the cross section was etched with xylene and coated with platinum by vapor deposition to prepare a sample, which was observed with SEM. On the resultant image, the diameter of 50 holes formed by etching was measured, and the resultant data were averaged to give an average value of a volume-average dispersion medium. The results are shown in Table 5.

### [Measurement of tanδ intensity (shear, 1 Hz)]

This was measured according to JIS K 7244-10 (2005). Specifically, the resultant sheet was cut into a disc having a diameter of 8 mm to be a sample, and using a strain control type dynamic viscoelasticity device "ARES-G2" (by TA Instrument Japan Corporation), and while given oscillation at a strain of 0.1% and at a frequency of 1 Hz, this was heated from -70°C up to 100°C at a constant rate of 3°C/min to measure the tanδ intensity of the sheet at 0°C, 10°C, 20°C, 30°C and 40°C, and the maximum value of tanδ intensity at 0°C to 40°C was determined. A higher tanδ intensity means more excellent vibration-damping performance. The results are shown in Table 4 and Table 5.

**Table 4**

| | | Example 1 | Example 2 | Example 3 | Example | Example 5 | Comparative Example 1 | Comparative Example 2 | Reference Example 1 |
|---|---|---|---|---|---|---|---|---|---|
| | | | | | 4 | | | | |
| Resin Composition (part by mass) | A-1 | 90 | 80 | 80 | 90 | 80 | 80 | 100 | - |
| | B-1 | 10 | 20 | 10 | - | - | - | - | 50 |
| | B-2 | - | - | - | 10 | 20 | - | - | - |
| | B-3 | - | - | 10 | - | - | 20 | - | 50 |
| tanδ (0°C) | | 0.08 | 0.10 | 0.17 | 0.07 | 0.07 | 0.09 | 0.07 | 0.59 |
| tanδ (10°C) | | 0.15 | 0.28 | 0.25 | 0.05 | 0.05 | 0.07 | 0.05 | 0.93 |
| tanδ (20°C) | | 0.14 | 0.27 | 0.13 | 0.05 | 0.06 | 0.05 | 0.03 | 0.49 |
| tanδ (30°C) | | 0.09 | 0.15 | 0.08 | 0.15 | 0.25 | 0.05 | 0.03 | 0.30 |
| tanδ (40°C) | | 0.05 | 0.08 | 0.08 | 0.18 | 0.27 | 0.06 | 0.03 | 0.18 |
| Maximum value of tanδ intensity at 0°C to 40°C | | 0.19 | 0.31 | 0.26 | 0.18 | 0.28 | 0.10 | 0.07 | 1.03 |
| Ratio of maximum value of tanδ intensity at 0 to 40°C of (B) to maximum value of tanδ intensity at 0 to 40°C of (A) (tanδ(B)max/tanδ(A)max) | | 31 | 31 | 15 | 30 | 30 | 5 | - | - |

**Table 5**

| | | Example 6 | Example 7 | Example 8 | Example 9 | Example 10 | Comparative Example 1 |
|---|---|---|---|---|---|---|---|
| Resin Composition (part by mass) | A-1 | 80 | 80 | 80 | 80 | 80 | 80 |
| | B-1 | 20 | 20 | 20 | 20 | 20 | - |
| | B-3 | - | - | - | - | - | 20 |
| | C-1 | 1 | 3 | 5 | - | - | - |
| | C-2 | - | - | - | 3 | - | - |
| | C-3 | - | - | - | - | 3 | - |
| Dispersion diameter (µm) | | 7 | 5 | 5 | 8 | 5 | 13 |
| tanδ (0°C) | | 0.09 | 0.10 | 0.10 | 0.11 | 0.09 | 0.09 |
| tanδ (10°C) | | 0.26 | 0.28 | 0.29 | 0.27 | 0.26 | 0.07 |
| tanδ (20°C) | | 0.29 | 0.30 | 0.27 | 0.27 | 0.28 | 0.05 |
| tanδ (30°C) | | 0.14 | 0.17 | 0.15 | 0.16 | 0.15 | 0.05 |
| tanδ (40°C) | | 0.08 | 0.09 | 0.08 | 0.07 | 0.09 | 0.06 |
| Maximum value of tanδ intensity at 0°C to 40°C | | 0.32 | 0.31 | 0.32 | 0.32 | 0.33 | 0.10 |
| Ratio of maximum value of tanδ intensity at 0 to 40°C of (B) to maximum value of tanδ intensity at 0 to 40°C of (A) (tanδ(B)max/tanδ(A)max) | | 31 | 31 | 31 | 31 | 31 | 5 |

Components shown in Tables 4 and 5 are as described below.
A-1: Hytrel 3046 by Du Pont-Toray Co., Ltd. (polyester-based thermoplastic elastomer (A): TPEE)

A maximum value of the tanδ intensity at 0 to 40°C of the above A-1 was measured in the same measurement method as that for the hydrogenated aromatic vinyl compound-based elastomer (B), and was 0.07.
B-1: Hydrogenated aromatic vinyl compound-based elastomer (B) produced in Production Example 1
B-2: Hydrogenated aromatic vinyl compound-based elastomer (B) produced in Production Example 2
B-3: Hydrogenated aromatic vinyl compound-based elastomer (B) produced in Production Example 3
C-1: Compatibilizer: Bond Fast BF-7M by Sumitomo Chemical Co., Ltd., ethylene-glycidyl methacrylate copolymer
C-2: Compatibilizer: Bond Fast BF-E by Sumitomo Chemical Co., Ltd., ethylene-glycidyl methacrylate copolymer
C-3: Compatibilizer: Epofriend AT501 by Daicel Corporation, epoxidized styrene-butadiene block copolymer

From Tables 4 and 5, it is known that the thermoplastic elastomer composition containing the polyester-based thermoplastic elastomer (A) and the hydrogenated aromatic vinyl compound-based elastomer (B) which is a hydrogenate of a block copolymer containing a polymer block (a) having a structural unit derived from an aromatic vinyl compound (styrene) and a polymer block (b) having a structural unit derived from a conjugated diene (isoprene, or isoprene and butadiene) and which has a glass transition temperature of -10 to 40°C, in a ratio by mass (A/B) of 99/1 to 1/99 can have improved vibration-damping performance while retaining the properties inherent in the polyester-based thermoplastic elastomer (A).

From Table 4, it is known that Examples 1 to 3 containing the hydrogenated aromatic vinyl compound-based elastomer (B-1) obtained by using both isoprene and butadiene attained a high tanδ at 0°C to 20°C than Examples 4 to 5 containing the hydrogenated aromatic vinyl compound-based elastomer (B-2) obtained by using butadiene alone, and it is also known that Examples 4 to 5 containing the hydrogenated aromatic vinyl compound-based elastomer (B-2) obtained by using butadiene alone attained a high tanδ at 30°C to 40°C than Examples 1 to 3 containing the hydrogenated aromatic vinyl compound-based elastomer (B-1) obtained by using both isoprene and butadiene.

From Table 5, it is known that, in the case where the compatibilizer was added, even when the amount added of the compatibilizer was varied within a range of 1 part by mass to 3 parts by mass relative to 100 parts by mass of the total of the polyester-based thermoplastic elastomer (A) and the hydrogenated aromatic vinyl compound-based elastomer (B) (Examples 6 to 8), the value of tanδ did not change greatly, and it is also known that, in the case where the compatibilizer was added, even when the kind of the compatibilizer changed among C-1 to C-3 (Examples 7, 9, 10), the value of tanδ did not change greatly.

### Industrial Applicability

The thermoplastic elastomer composition of the present invention can have improved vibration-damping properties while retaining the properties inherent in the polyester-based thermoplastic elastomer (A), and therefore can be favorably used for, for example, vibration-damping materials, gears and composite molded objects.

## Claims

1. A thermoplastic elastomer composition comprising a polyester-based thermoplastic elastomer (A) and a hydrogenated aromatic vinyl compound-based elastomer (B) having a glass transition temperature Tg of -10 to 40°C, wherein:
the hydrogenated aromatic vinyl compound-based elastomer (B) is a hydrogenate of a block copolymer containing a polymer block (a) having a structural unit derived from an aromatic vinyl compound and a polymer block (b) having a structural unit derived from a conjugated diene compound, and
the ratio by mass of the polyester-based thermoplastic elastomer (A) to the hydrogenated aromatic vinyl compound-based elastomer (B), (A/B) is 99/1 to 1/99.

2. The thermoplastic elastomer composition according to claim 1, wherein a ratio of the storage elastic modulus G' at 0°C (G'(0°C)) to the storage elastic modulus G' at 50°C (G'(50°C)), (G'(0°C)/G'(50°C)) of the hydrogenated aromatic vinyl compound-based elastomer (B) is more than 10.

3. The thermoplastic elastomer composition according to claim 1 or 2, wherein the ratio by mass of the polyester-based thermoplastic elastomer (A) to the hydrogenated aromatic vinyl compound-based elastomer (B), (A/B) is 75/25 to 95/5.

4. The thermoplastic elastomer composition according to any one of claims 1 to 3, wherein the content of the polymer block (a) in the block copolymer is 30% by mass or less.

5. The thermoplastic elastomer composition according to claim 4, wherein the content of the polymer block (a) in the block copolymer is 16% by mass or less.

6. The thermoplastic elastomer composition according to any one of claims 1 to 5, wherein the conjugated diene compound contains isoprene.

7. The thermoplastic elastomer composition according to any one of claims 1 to 6, wherein the polymer block (b) has a structural unit containing at least one alicyclic skeleton (X) represented by the following formula (X) in the main chain: 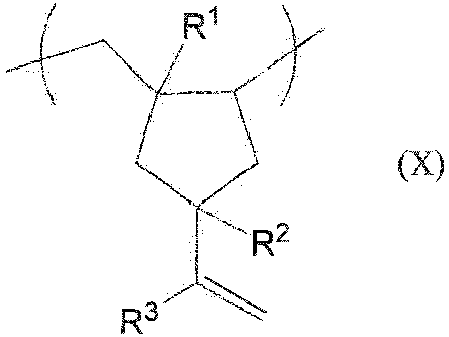 wherein R¹ to R³ each independently represent a hydrogen atom or a hydrocarbon group having 1 to 11 carbon atoms, and plural R¹ to R³ each may be the same or different.

8. The thermoplastic elastomer composition according to claim 7, wherein at least one alicyclic skeleton (X) is an alicyclic skeleton (X') where at least one of R¹, R² or R³ is a hydrocarbon group having 1 to 11 carbon atoms.

9. The thermoplastic elastomer composition according to any one of claims 1 to 8, wherein the hydrogenation rate of the polymer block (b) is 85 to 99 mol%.

10. The thermoplastic elastomer composition according to any one of claims 1 to 9, wherein the vinyl bond content in the polymer block (b) is 65 to 90 mol%.

11. The thermoplastic elastomer composition according to any one of claims 1 to 10, wherein the weight-average molecular weight of the hydrogenated aromatic vinyl compound-based elastomer (B) is 30,000 to 300,000.

12. The thermoplastic elastomer composition according to any one of claims 1 to 11, wherein the peak top intensity of tanδ of the hydrogenated aromatic vinyl compound-based elastomer (B) is 1 or more.

13. The thermoplastic elastomer composition according to any one of claims 1 to 12, wherein the maximum value of the tanδ intensity at 0 to 40°C of the thermoplastic elastomer composition is 0.1 or more.

14. The thermoplastic elastomer composition according to claim 13, wherein the maximum value of the tanδ intensity at 0 to 40°C of the thermoplastic elastomer composition is 0.15 or more.

15. The thermoplastic elastomer composition according to any one of claims 1 to 13, wherein the maximum value of the tanδ intensity at 0 to 40°C of the polyester-based thermoplastic elastomer (A) is 0.05 or more.

16. The thermoplastic elastomer composition according to any one of claims 1 to 15, wherein the ratio of the maximum value of the tanδ intensity at 0 to 40°C of the hydrogenated aromatic vinyl compound-based elastomer (B) to the maximum value of the tanδ intensity at 0 to 40°C of the polyester-based thermoplastic elastomer (A), (tanδ(B)max/tanδ(A)max) is 10 to 80.

17. A vibration-damping material comprising the thermoplastic elastomer composition of any one of claims 1 to 16.

18. A gear comprising the thermoplastic elastomer composition of any one of claims 1 to 16.

19. A composite molded object, wherein a thermoplastic elastomer composition layer containing the thermoplastic elastomer composition of any one of claims 1 to 16 bonds by fusion to a polar resin layer containing a polar resin.
